# EUROPÄISCHE PATENTANMELDUNG

(11) **EP 1 563 967 A1**
(43) Veröffentlichungstag der Anmeldung: **17.08.2005**
(21) Anmeldenummer: 04003038.9
(22) Anmeldetag: 11.02.2004
(51) Int. Cl.: B26B 21/38, B26B 21/52

(54) **Rasierer und Verfahren zur Herstellung eines Rasierers**

(71) Anmelder: Eveready Battery Company, Inc., St. Louis MO 63141 (US)
(72) Erfinder: Fischer, Franz, 6234 Triengen (CH); Pfenniger, Phillip, 6234 Triengen (CH)
(74) Vertreter: Patentanwälte Schaad, Balass, Menzl & Partner AG

(57) **Zusammenfassung**

Die Erfindung betrifft einen Rasierer, insbesondere zum Nassrasieren, mit einem einen Griffbereich (10), einen Kopfbereich (14) und einen zwischen dem Griffbereich (10) und dem Kopfbereich (14) gelegenen Halsbereich (12) umfassenden Körper und mit zumindest teilweise innerhalb des Körpers angeordneten Funktionsbauteilen, die eine elektrisch betriebene Vibrationseinrichtung (20) zur Erzeugung von Vibrationen im Kopfbereich und eine einen Energiespeicher (24) aufweisende elektrische Versorgungseinrichtung für die Vibrationseinrichtung (20) umfassen. Erfindungsgemäss besteht der Körper aus zumindest einer als Festigkeitsträger dienenden Hartkomponente (16) sowie wenigstens einer im Spritzgiessverfahren hergestellten Weichkomponente (18), wobei wenigstens einige der Funktionsbauteile zumindest teilweise direkt mit der Weichkomponente (18) umspritzt sind. Die Erfindung betrifft des weiteren ein Verfahren zur Herstellung eines solchen Rasierers.

## Beschreibung

Die Erfindung betrifft einen Rasierer, insbesondere Nassrasierer, mit einer elektrischen Vibrationseinheit und ein Verfahren zur Herstellung eines solchen Rasierers gemäss Anspruch 1 bzw. 21.

Bei der Herstellung derartiger Rasierer kommt es insbesondere darauf an, dass die innerhalb des Körpers angeordneten Funktionsbauteile korrekt positioniert sind und eine sichere sowie zuverlässige Funktionsweise gewährleistet ist. Da derartige Rasierer meist in großen Stückzahlen hergestellt werden, soll ferner die Herstellung im Rahmen einer kostengünstigen und effizienten Massenproduktion möglich sein. Nachdem des Weiteren das äußere Erscheinungsbild der Rasierer für die Kaufentscheidung zunehmend eine nicht unwesentliche Rolle spielt, soll die Konstruktion der Rasierer eine möglichst große Designfreiheit erlauben, welcher bei der Herstellung der Rasierer Rechnung getragen werden muss. Dabei kommt es nicht nur darauf an, einen ergonomisch vorteilhaften Rasierer zu schaffen, sondern der Rasierer muss außerdem einfach bedienbar sein, während der Benutzung sicher festgehalten werden können und eine einwandfreie, sich angenehm anfühlende Oberfläche aufweisen.

Ein Nassrasierer mit einer elektrischen Vibrationseinheit ist beispielsweise aus der US 5,299,354 bekannt. Der Nassrasierer umfasst einen Körper mit einem Kopfbereich, der die Rasierklingeneinheit trägt, und einem Griffbereich. Kopfbereich und Griffbereich sind mehrstückig und miteinander verdrehsicher verbunden. Im Kopfbereich ist ein Motor mit einem Exzenter eingeklebt. Die Energieversorgung erfolgt mittels einer Batterie, die in einem Hohlraum im Griffbereich angeordnet ist. Sie ist mit dem Motor über Leitungen verbunden, die durch ein Isolierstück mit Kanälen geführt sind.

Ein ähnlicher Nassrasierer ist aus der US 5,046,249 bekannt. Hier sind Kopfbereich und Griffbereich über ein elastisches Dämpfungsteil miteinander verbunden, das eine Aussparung zum Durchtritt von Leitungen hat.

Die bekannten Nassrasierer bestehen aus eine Vielzahl von Einzelteilen, insbesondere Kopfbereich und separatem Griffbereich, die separat hergestellt und anschliessend miteinander verbunden sind. Die Abdichtung von Hohlräumen für den Motor bzw. den Energiespeicher muss mit zusätzlichen Dichtungen, z.B. O-Ringen, vorgenommen werden. Die Herstellung der Komponenten und der Zusammenbau des Geräts ist daher verhältnismässig aufwendig. Des weiteren bestehen lediglich eingeschränkte Designmöglichkeiten, da mit einem Formkern gearbeitet wird, der im Anschluss an den Spritzvorgang gezogen wird, wodurch sich die Formgebung auf im Wesentlichen zylindrische Geometrien beschränkt. Insbesondere können nur Rasierer mit geraden Gehäuseteilen hergestellt werden, um das Einschieben der Komponenten von hinten zu ermöglichen.

Elektrische Rasierer mit wiederaufladbaren Energiespeichern (Akkumulatoren) sind bekannt und auf dem Markt als Trockenrasierer weit verbreitet.

Der Erfindung liegt die Aufgabe zugrunde, eine Möglichkeit zur Herstellung von Rasierern zu schaffen, die den eingangs erwähnten Anforderungen gerecht wird und bei der insbesondere mit einer minimalen Anzahl von erforderlichen Werkzeugen, insbesondere für den Spritzguss, und Montageschritten gleichzeitig eine maximale Designfreiheit gegeben ist, wobei insbesondere die Herstellung eines gebogenen und gegenüber dem Griffbereich verjüngten Halsbereichs möglich sein soll.

Die Lösung dieser Aufgabe erfolgt durch einen Rasierer mit den Merkmalen von Anspruch 1 sowie durch ein Verfahren zu dessen Herstellung mit den Merkmalen von Anspruch 17. Vorteilhafte Weiterbildungen ergeben sich aus den abhängigen Ansprüchen, der Beschreibung und den Zeichnungen.

Bevorzugte Ausführungsformen der Erfindung sind in den abhängigen Ansprüchen, der Beschreibung sowie der Zeichnung angegeben.

Die Herstellung des Rasiererkörpers aus wenigstens einer Hartkomponente und zumindest einer weiteren Kunststoffkomponente, vorzugsweise einer Weichkomponente, ermöglicht eine hohe Designfreiheit bei gleichzeitiger Erfüllung der Stabilitäts- und Festigkeitsanforderungen an den Rasierer. Durch das erfindungsgemäß vorgesehene direkte Umspritzen wenigstens einiger Funktionsbauteile mit der weiteren Kunststoffkomponente, vorzugsweise der Weichkomponente, erfolgt eine optimale Integration der Funktionsbauteile in den Rasiererkörper. Somit können bereits bei der Herstellung des Körpers die Funktionsbauteile an den dem jeweiligen Design entsprechenden Stellen im Körper von aussen direkt positioniert werden, wodurch dem Designer ein maximaler Spielraum für die Formgestaltung des Rasierers verliehen wird. So können insbesondere die Achsen des Griffteils und des Halsteils einen bedeutenden Winkel eingehen, welcher mit den bekannten Montageverfahren nur schwer zu realisieren ist. Ferner wird durch die erfindungsgemäße Vorgehensweise die Rasiererherstellung erheblich verkürzt und vereinfacht, da Spritz- und Montageschritte gleichzeitig oder unmittelbar nacheinander erfolgen können. Des Weiteren ist von Vorteil, dass die Funktionsteile durch das direkte Umspritzen mit dem Kunststoff automatisch am Rasiererkörper fixiert werden, was die Durchführung ggf. erforderlicher weiterer Herstellungsschritte vereinfacht. Zusätzlich werden durch erfindungsgemäss Montagetechnologie im Bereich der Funktionsbauteile minimale Abmasse möglich, welche Handhabung, Gewicht und Herstellungskosten optimieren lassen.

Von besonderem Vorteil ist außerdem, dass die Funktionsbauteile durch das Umspritzen optimal vor äußeren Einflüssen geschützt und insbesondere wasserdicht eingekapselt werden können.

Die Erfindung bedeutet eine Abkehr von der bekannten Vorgehensweise bei der Rasiererherstellung, bei der eine strenge Trennung zwischen Spritzgiessschritten einerseits und Montageschritten andererseits eingehalten wird. Erfindungsgemäß wurde festgestellt, dass grundsätzlich die Funktionsbauteile den beim Kunststoffspritzen auftretenden Druck- und Temperaturbelastungen ausgesetzt werden können, ohne dass die Funktionsfähigkeit der Bauteile beeinträchtigt wird.

Das bevorzugte Einbetten wenigstens einiger der Funktionsbauteile in die Weichkomponente hat des weiteren den Vorteil, dass der Spritzvorgang schonender für die Funktionsbauteile ist, da der Spritzdruck der Weichkomponente geringer als der der Hartkomponente ist. Die Weichkomponente hat ausserdem eine hohe Fliessfähigkeit, so dass die Funktionsbauteile zuverlässig umschlossen werden, auch wenn sie kompliziert geformt sein sollten. Ein weiterer Vorteil ist, dass die Funktionsbauteile in einem Arbeitsgang mit weiteren, sowieso bei den meisten Rasierern vorhandenen weichelastischen Elementen, z.B. weichelastische Elemente im Griffbereich oder eine elastische Zone im Halsbereich, gespritzt werden können. Damit ist kein zusätzlicher Herstellungsschritt für diese weichelastischen Elemente notwendig.

Die erfindungsgemässe Rasierer hat den weiteren Vorteil, dass die weitere Kunststoffkomponente die Funktionsbauteile einbettet, schützt, gegebenenfalls abdichtet, jedoch aufgrund der elastischen Eigenschaften, insbesondere der bevorzugten Weichkomponente, ihre Betätigung von Aussen und Kommunikation bzw. Interaktion (z.B. Betätigung, Informationsübertragung, Energieübertragung) mit der Aussenwelt ermöglicht.

In einer besonders bevorzugten Variante des erfindungsgemäßen Herstellungsverfahrens wird zunächst eine erste, bevorzugt harte, Komponente ohne Funktionsbauteile hergestellt, insbesondere gespritzt. Diese hat vorzugsweise eine Aufnahme für die Funktionsbauteile, beispielsweise eine im Querschnitt U-förmige Ausnehmung an der Rasiererrückseite, die vor dem Überspritzen auf einfache Weise befüllt werden kann. Nach dem Herstellen der ersten Komponente werden zumindest einige Funktionsbauteile an der ersten Komponente positioniert und fixiert, wobei anschließend die Einheit aus erster Komponente und Funktionsbauteilen mit zumindest einer weiteren, bevorzugt weichen Komponente zumindest teilweise umspritzt wird. Bei dieser Variante ist von Vorteil, dass für die zu umspritzenden Funktionsbauteile keine speziellen Maßnahmen zum Festhalten am Spritzwerkzeug getroffen werden müssen. Insbesondere dann, wenn die erste Spritzkomponente eine Hartkomponente und die weitere Spritzkomponente eine Weichkomponente ist, bietet diese Variante den weiteren Vorteil einer besonderen Schonung der mit der Weichkomponente zu umspritzenden Funktionsbauteile, da Weichkomponenten zumindest in den meisten Fällen mit im Vergleich zur Hartkomponente geringem Druck und niedriger Temperatur gespritzt werden können.

Gemäß einer alternativen Variante werden vor dem Herstellen einer ersten Komponente zumindest einige Funktionsbauteile in einem Spritzgiesswerkzeug positioniert und daraufhin mit der ersten Komponente umspritzt, wobei anschließend die Einheit aus erster Komponente und umspritzten Funktionsbauteilen mit zumindest einer weiteren Komponente umspritzt werden. Da bei dieser Variante die Funktionsbauteile zunächst am Spritzgiesswerkzeug positioniert werden und daher das Formwerkzeug zum Halten der Funktionsbauteile an diesen angreifen muss, ist nach dem Spritzen der ersten Komponente diese mit Freistellungen für die Angriffspunkte an den vorpositionierten Funktionsbauteilen versehen. Beim Spritzen der weiteren Komponente werden diese Freistellungen geschlossen, so dass sie am fertigen Produkt nicht mehr zu erkennen sind.

Um die Belastungen der Funktionsbauteile durch das Spritzen weiter zu minimieren, kann gemäß einem weiteren Ausführungsbeispiel der Erfindung vorgesehen sein, dass zumindest bei einer Komponente zunächst in einem ersten Schritt bei niedrigem Spritzdruck eine Überdeckung der Funktionsbauteile gebildet und anschließend in wenigstens einem weiteren Schritt die Komponente bei hohem Spritzdruck vervollständigt wird.

Des Weiteren ist in einer Variante der Erfindung vorgesehen, dass vor dem Spritzen einer weiteren Komponente an der Einheit aus zumindest einer ersten Komponente und zu umspritzenden Funktionsbauteilen wenigstens ein weiteres zu umspritzendes Funktionsbauteil fixiert wird. Bei diesem weiteren Funktionsbauteil handelt es sich insbesondere um ein z.B. stift-, klammer- oder bügelförmiges Kontaktelement zur Herstellung einer elektrischen Verbindung zwischen zwei oder mehreren anderen Funktionsbauteilen.

Die Funktionsbauteile können in vorteilhafter Weise für einen Zusatzzweck genutzt werden, wenn gemäß einer weiteren bevorzugten Ausführungsform der Erfindung wenigstens ein für ein oder mehrere später einzusetzende Funktionsbauteile vorgesehener Hohlraum einer ersten Komponente durch wenigstens ein mit der ersten Komponente umspritztes und/oder mit wenigstens einer weiteren Komponente zu umspritzendes Funktionsbauteil gegenüber einer weiteren Komponente abgedichtet wird.

Gemäß einem weiteren bevorzugten Ausführungsbeispiel der Erfindung ist vorgesehen, dass durch Spritzen vorzugsweise einer Weichkomponente ein zum Betätigen wenigstens eines elektrischen Funktionsbauteils in einen Hohlraum einer zuvor gespritzten Hartkomponente eindrückbarer Betätigungsbereich ausgebildet wird. Hierdurch werden in vorteilhafter Weise die elastischen Eigenschaften der vorzugsweisen Weichkomponente genutzt, um einen Betätigungsbereich z.B. zum Beaufschlagen eines im Rasiererkörper angeordneten Schaltelementes zum Ein- und Ausschalten des Rasierers zu schaffen. Vorzugsweise ist der eindrückbare Schaltbereich auf der gleichen Bedienseite wie der Haltebereich einer Wechselklinge mit entsprechendem Wechselmechanismus angeordnet. Der Wechselmechanismus kann ebenfalls mittels Druck auf ein für den Konsumenten vorgesehenes Betätigungsfeld aus Weichkomponente ausgelöst werden.

Des Weiteren wird erfindungsgemäß vorgeschlagen, einen insbesondere im Halsbereich oder im Bereich des Übergangs zwischen Halsbereich und Griffbereich gelegenen Vibrationsdämpfungsbereich des Körpers aus wenigstens zwei unterschiedlichen Material-, insbesondere Kunststoffkomponenten herzustellen. Hierdurch können die Dämpfungseigenschaften des Dämpfungsbereiches gezielt an die jeweiligen Erfordernisse angepasst werden. Besonders bevorzugt ist es, wenn der Vibrationsdämpfungsbereich durch eine gezielte Schwächung einer Hartkomponente mittels einer Weichkomponente gebildet wird.

Zur Bildung des Vibrationsdämpfungsbereiches ist es bevorzugt, wenn die Hartkomponente mit einem Muster von Ausnehmungen hergestellt wird, die anschließend durch Spritzen wenigstens einer weiteren Komponente, bei der es sich insbesondere um eine Weichkomponente handelt, gefüllt werden.

Die Vibrationseinrichtung wird in bevorzugter Weise möglichst nahe bei den Klingen, beispielsweise im Halsbereich positioniert. Der Vibrationsdämpfungsbereich ist vorzugsweise zwischen der Vibrationseinrichtung und dem Griffbereich angeordnet, um letzteren möglichst vibrationsfrei zu halten.

Eine elektrische Verbindung zwischen einer im Kopfbereich oder im Halsbereich angeordneten Vibrationseinrichtung einerseits und einem im Griffbereich angeordneten Energiespeicher andererseits ist vorzugsweise über ein bistabiles Schaltelement herstellbar bzw. unterbrechbar, das durch Beaufschlagen an zwei auf gegenüberliegenden Seiten eines Gelenkbereiches gelegenen Schenkeln zwischen zwei zumindest im Wesentlichen formstabilen Zuständen umgesteuert werden kann.

Ein derartiges bistabiles Schaltelement, das auch als "Frosch" bezeichnet wird, kann insbesondere durch einen von einer gespritzten Weichkomponente gebildeten Schaltbereich, der vom Benutzer in einen Hohlraum, in welchem der Frosch angeordnet ist, hineingedrückt werden kann, betätigt werden.

Bei den Funktionsbauteilen, die direkt mit zumindest einer Kunststoffkomponente umspritzt werden, handelt es sich insbesondere um
- eine Vibrationseinrichtung, die bevorzugt eine Anordnung aus Elektromotor und Exzenter oder einen elektromagnetisch angetriebenen Schwinganker inklusive Schutzhülse umfasst,
- mit der Vibrationseinrichtung verbundene elektrische Leitungen,
- separate Kontaktelemente, die dazu dienen, elektrische Verbindungen zwischen den anderen

### Funktionsbauteilen herzustellen.

Grundsätzlich können die zu umspritzenden Funktionsbauteile - in Abhängigkeit von der jeweiligen Konstruktion des Rasierers - außerdem Sensoren (z.B. Sensoren zur Druck- und Zeitmessung, zum, zur Positionsbestimmung, zur Bewegungsermittlung sowie zur Detektion von chemischen Substanzen oder Zusammensetzungen), Licht emittierende Bauteile, Widerstände, ICs, Schalteinrichtungen sowie akustische Bauelemente umfassen. Des weiteren können Steckkontakte (Buchse), z.B. zum Aufladen der Energiequelle oder zur Strom- oder Datenübertragung, Datenträger, z.B. Mikrochips, oder ein beispielsweise zum Diebstahlschutz einsetzbarer Passivsender (Radio Frequency Identification Chip) vorhanden sein. Bei gewissen Anwendungen, z.B. bei Verwendung eines Passivsenders, ist es entbehrlich, eine Energiequelle in den Rasierer zu integrieren.

Durch das Überspritzen mit der weiteren Komponente werden die Funktionsbauteile am vorgesehenen Standort fixiert, bei Einsatz der weichelastischen Komponente falls nötig flexibel gelagert und im überspritzten Bereich gegen das Eindringen von Wasser abgedichtet. Eine Möglichkeit, mit der Aussenwelt Kontakt herzustellen, ist das Überspritzen von Funktionsbauteilen mit einer dünnen Schicht der Weichkomponente, die zur Herstellung einer leitenden Verbindung durchstochen werden kann. Die gummielastische Weichkomponente hat die Eigenschaft, sich nach dem Entfernen des spitzen Kontaktgebers wieder wasserdicht zu verschliessen. Ein ähnliches Prinzip kann eingesetzt werden, um innerhalb des Rasierers eine leitfähige Verbindung zwischen Komponenten herzustellen, die relativ zueinander z.B. durch Biegen des Rasierers beweglich sind.

Es kann sich bei den Funktionsbauteilen also um elektronische Bauelemente handeln, die eine vergleichsweise große Empfindlichkeit gegenüber äußeren Einflüssen aufweisen können. Die Funktionsbauteile können mit einer Schutzummantelung beispielsweise aus Kunststoff, Keramik oder Metall versehen sein. Außerdem können die Funktionsbauteile mit einem Harz oder einem anderen Schutzmaterial mindestens teilweise umgossen sein.

Um die Belastungen der zu umspritzenden Funktionsbauteile auf ein Minimum zu reduzieren, ist es erfindungsgemäß bevorzugt, wenn mit einem relativ niedrigen Spritzdruck gearbeitet wird, wobei jedoch gleichzeitig eine homogene Materialverteilung im jeweiligen Spritzgiessteil sichergestellt wird. Bevorzugt werden besonders leicht fließende Kunststoffe verwendet. Das erfindungsgemäß bevorzugte Material ist Polypropylen (PP) mit einem Fliessindex von MVR 4 - 25, wobei insbesondere PP mit einem Fließindex von MVR 20 zum Einsatz kommt.

Ferner sind erfindungsgemäß vorzugsweise relativ niedrige Verarbeitungstemperaturen vorgesehen. Insbesondere dann, wenn gemäß der vorstehend erwähnten besonders bevorzugten Variante zunächst eine erste Komponente ohne Funktionsbauteile gespritzt wird, wird als bevorzugtes Material zum Umspritzen der Funktionsbauteile ein thermoplastisches Elastomer (TPE) verwendet, und zwar bei einer Temperatur im Bereich von 170°C bis 250°C, vorzugsweise von etwa 200°C.

Erfindungsgemäß kann beim Spritzen der Komponenten jeweils sowohl entweder ein einziger Anspritzpunkt oder eine Mehrzahl von Anspritzpunkten verwendet werden. Im Fall eines einzigen Anspritzpunktes wird dessen Position vorzugsweise derart gewählt, dass das empfindlichste Funktionsbauteil in einer möglichst großen Entfernung vom Anspritzpunkt gelegen ist, so dass ein möglichst langer Kunststofffüllweg bis zu diesem Funktionsbauteil zurückgelegt werden muss. Bei Verwendung sowohl eines einzigen Anspritzpunktes als auch mehrerer Anspritzpunkte kann außerdem jeweils mit einem zeitlich variierenden Spritzdruck gearbeitet werden. Der Druckverlauf kann dabei gezielt an die jeweiligen Gegebenheiten angepasst werden. Insbesondere an dem dem empfindlichsten Funktionsbauteil nächstgelegenen Anspritzpunkt kann mit einem relativ geringen Nachdruck von weniger als 600 bar und vorzugsweise von weniger als 200 bar gearbeitet werden.

Was die verwendeten Kunststoffmaterialien anbetrifft, so kann für eine Hartkomponente des Rasiererkörpers z.B. Acrylbutadienstyrol (ABS), Polystyrol (PS), Polyethylenterephtalat (PET), Styrol-Acrylnitril (SAN), Polycarbonat (PC), Polyamid (PA) oder PolymethylMethacrylat (PMMA) verwendet werden, wobei das bevorzugte Material Polypropylen (PP) ist. Für die Weichkomponente wird vorzugsweise ein zur jeweiligen Hartkomponente affines, d.h. ein sich mit der Hartkomponente verbindendes, thermoplastisches Elastomer (TPE) verwendet, wodurch besonders geeignete weichelastische bzw. gummielastische Eigenschaften erzielt werden können.

Für zumindest eine Komponente des Rasiererkörpers kann ein lichtdurchlässiger bzw. transparenter oder zumindest transluzenter Kunststoff vorgesehen sein. Hierfür kommt insbesondere MABS, SAN, PA, PC, PMMA, PS oder PET in Frage. Bei der Verarbeitung von transparenten Kunststoffen wird bevorzugt mit einem vergleichsweise hohen Spritzdruck gearbeitet, wofür die vorstehend erwähnte Variante, bei der zunächst eine erste Komponente ohne Funktionsbauteile gespritzt wird, besonders geeignet ist.

Um die Funktionsbauteile nicht unzulässig grossen Kräften, beispielsweise Biege- oder Torsionskräften, auszusetzen, des Weiteren erfindungsgemäß vorgesehen, dass in solchen Regionen des Rasiererkörpers, in denen Funktionsbauteile angeordnet sind, eine vorgegebene Mindestwandstärke des Kunststoffs nicht unterschritten wird. Bei der Hartkomponente wird bevorzugt ein Wert von etwa 0,5 mm für diese minimale Wandstärke nicht unterschritten, wobei vorzugsweise die Mindestwandstärke im Bereich von 1 bis 5 mm liegt. Eine Region, an welcher bis auf die Mindestwandstärke herunter gegangen wird, ist vorzugsweise der Bereich des Halses, an welchem die Vibrationseinrichtung angeordnet ist.

Die minimale Schichtdicke der zu überspritzenden Weichkomponente beträgt 0,5 mm. Vorzugsweise liegt diese aber zwischen 1 - 6 mm, damit die Funktionsbauteile bei hellen Farben der Weichkomponente nicht optisch durchscheinen können und damit beim Rasieren eine Art Dämpfer gegen die teilweise harten (z.B. metallischen) Funktionselemente besteht.

Gemäß einer weiteren bevorzugten Ausführungsform der Erfindung ist vorgesehen, dass zumindest einige Funktionsbauteile derart an einer bereits gespritzten Kunststoffkomponente, insbesondere einer Hartkomponente, angeordnet werden, dass sich die Funktionsbauteile bezogen auf die Strömungsrichtung einer noch zu spritzenden weiteren Kunststoffkomponente, insbesondere einer Weichkomponente, zumindest bereichsweise im Schatten wenigstens eines schützenden Abschnitts der Hartkomponente befinden.

Hierdurch können die zu umspritzenden Funktionsbauteile auf besonders einfache und dennoch wirkungsvolle Weise vor den Einflüssen insbesondere hinsichtlich Druck und Temperatur der anschließend zu spritzenden Komponente oder Komponenten geschützt werden. Bei den stromaufwärts der Funktionsbauteile gelegenen Abschnitten handelt es sich insbesondere um gezielt vorgesehene oder ohnehin konstruktionsbedingt vorhandene Hindernisse oder Vorsprünge der zuvor gespritzten Komponente.

Des Weiteren ist der zu spritzende Kunststoffkörper der erfindungsgemäßen Rasierers vorzugsweise derart ausgelegt, dass im Bereich der Funktionsbauteile scharfe Vorsprünge, Ecken und Kanten vermieden werden, um eine insbesondere durch Kerbwirkung bedingte Bruchgefahr auszuschließen oder zumindest auf ein Minimum zu reduzieren.

Zur Versorgung von Funktionsbauteilen mit elektrischer Energie werden vorzugsweise flexible elektrische Leitungen in Form eines metallischen Drahtes verwendet, die zumindest dann, wenn Leitungen unterschiedlicher Polaritäten zusammen geführt werden, bevorzugt mit einer elektrisch isolierenden Ummantelung versehen sind. Auf eine derartige Ummantelung kann insbesondere dann verzichtet werden, wenn die betreffenden Leitungen separat und in einem ausreichend großen Abstand voneinander geführt werden. Alternativ können die elektrischen Verbindungen in Form von gespritzten, elektrisch leitfähigen Kunststoffen, von gestanzten Metallblechen, von auf der gespritzten Kunststoffkomponente metallisch geprägten Leiterbahnen oder von durch galvanische Verfahren auf der gespritzten Kunststoffkomponente aufgebrachten Leiterbahnen vorgesehen sein.

Des Weiteren werden vorzugsweise zumindest diejenigen elektrischen Verbindungen, welche entlang solcher Regionen des Rasierers geführt werden, die wie insbesondere der Halsbereich elastischen Verformungen ausgesetzt sind, derart ausgeführt, dass sie einerseits möglichst flexibel sowie bruchresistent gegenüber Wechselbiegungen sind und andererseits nicht zu einer zusätzlichen Versteifung der betreffenden Rasiererregion führen.

Vorzugsweise wird erfindungsgemäß der Kunststoffkörper des Rasierers derart ausgebildet, dass elektrische Verbindungen zwischen einer Stromquelle und einem Stromverbraucher entlang einer im Wesentlichen geraden Linie verlaufen. Elektrische Leitungen können hierdurch bei der Montage auf besonders einfache Weise gezogen werden. Hierzu wird bevorzugt in einer der Spritzkomponenten des Rasiererkörpers ein zumindest im Wesentlichen geradlinig verlaufender Kanal für elektrische Verbindungsleitungen ausgebildet. Vorzugsweise werden mittels der Hartkomponente oder weiterer Funktionsbauteile Haltehilfen zur Fixierung der elektrischen Leitungen vor dem Umspritzen vorgesehen.

In einer weiteren Variante der Erfindung wird die an sich bekannte direkte Ladetechnik für Rasierer derart angepasst, dass sie auch bei Nassrasierern mit elektrischen Funktionsbauteilen eingesetzt werden kann. Der Ladestrom wird mittels eines Netzteils - bestehend aus einem Transformator und einem Gleichrichterelement oder bestehend aus einer getakteten elektronischen Schaltung - direkt, d.h. mittels Kontaktelementen auf den elektrischen Rasierer übertragen. Innerhalb des Rasierers ist ein Kontaktelement, gegebenenfalls mit Verbindungsleitungen zum Akkumulator, vorhanden. Zur Erfüllung ästhetischer Ansprüche besteht mehr Designfreiheit. Die Erfindung ermöglicht den Einsatz günstiger, in Masse produzierter Komponenten, evtl. Einsatz von Normelementen, und damit die Verwendung im Haushalt bereits vorhandener Netzteile.

Erfindungsgemäss ist ein Hohlraum des Rasierers, in dem sich der Energiespeicher befindet, durch ein Dichtelement abgedichtet, so dass beim bestimmungsgemässen Gebrauch des Rasierers kein Wasser oder sonstige Fremdstoffe eindringen können. Korrosion und Verschmutzung des Energiespeichers und der elektrischen Kontakte werden so verhindert.

In einer Variante der Erfindung befinden sich Energiespeicher und Kontaktelement gemeinsam im Hohlraum, der beim bestimmungsgemässen Gebrauch, d.h. beim Rasieren, abgedichtet ist. Das dazu verwendete Dichtelement kann zumindest so weit bewegt werden, dass das Kontaktelement für den Ladevorgang zugänglich ist.

In einer vorteilhaften Weiterbildung ist die Ladelogik so gestaltet, dass der Betrieb des Geräts während des Ladens nicht möglich ist. Dadurch werden Kurzschlüsse und Verunreinigungen des Innenraums verhindert und die Benutzersicherheit erhöht.

Der Rasierer wird vorzugsweise so verpackt, dass die Präsentation in der Verpackung selbsterklärend ist. Beispielsweise sind das Netzteil und/oder die Kontaktelemente durch Sichtfenster sichtbar. Auf diese Weise kann der Käufer auch überprüfen, ob er bereits ein geeignetes Netzteil besitzt. Der Griffbereich mit Schaltmembrane wird vorzugsweise gegen vorn Präsentiert, dass der Benutzer das Gerät durch die Verpackung hindurch mit einem Druck auf die Membrane testen kann.

Der Akkumulator besteht vorzugsweise aus dem Typ NiCd (NickelCadmium) oder NiMh (NickelMetalhydrid). Es werden in Masse produzierte Zellen des Typs AA oder AAA eingesetzt. Die Geräte werden vorzugsweise mit einer Spannung von unter 4 Volt, vorzugsweise mit 1.2 Volt betrieben. Aus Kostengründen sollte mit einer einzigen 1.2 Volt Akkumulatorzelle gearbeitet werden. Eine optimale Nutzungsdauer pro Entladezyklus des Akkumulators ist mindestens 2h, vorzugsweise aber mindestens 5h oder mehr. Falls dieses Verhältnis mit einer AAA Zelle erreicht werden kann, ist diese Grösse aus Platzgründen bevorzugt. Bei einem Rasierer mit vibrierendem Kopfteil ist die bevorzugte Zellenkapazität AAA 300 - 800 mAh.

Da der Akkumulator besonders während dem Ladevorgang explosive Gase wie Sauerstoff oder/und Wasserstoff produzieren kann, ist der Hohlraum vorzugsweise mit einem gasdurchlässigen, aber den Hohlraum gegen Wasser schützenden, Dichtelement abgedichtet. Vorzugsweise wird eine entsprechende an der Hartkomponente angebrachte Membrane eingesetzt.

Das verwendete Netzteil steht in Verbindung mit der lokalen Stromversorgung (z.B. 230V AC oder 115V AC). Vorzugsweise ist das Netzteil so ausgebildet, dass der Netzstecker im Gehäuse integriert ist und das Netzteil somit direkt in eine Steckdose eingesteckt werden kann. In diesem Fall wird ein Netzteil der Schutzklasse II, 4kVolt und IP X4 eingesetzt (Norm IEC 60529, DIN 40050). Weniger bevorzugt kann aber auch ein Netzkabel zwischen Steckdose und Netzteil vorgesehen werden, bei dieser Ausgestaltungsvariante müsste ein Netzteil mit einem höheren Schutzgrad z.B. IP X7 eingesetzt werden. Das Netzteil ist auf jeden Fall kurzschlussfest zu halten.

Im Netzteil wird die lokale Netz-Wechselspannung (z.B. 210 - 250 Volt AC 50 Hertz) in eine Niedervolt-Gleichspannung umgewandelt um damit den Akkumulator aufzuladen. Mittels einem Kabel und Kontaktelement wird nun die Gleichspannung (4 - 7 Volt DC) vom Netzteil direkt auf den elektrischen Rasierer übertragen. Die Ladeströme liegen bevorzugt bei 30 - 230 mA entsprechend 10% der Akkumulatoren Kapazität (C/10). Dies führt zu einer Ladezeit von 10 - 14 Stunden bei oben erwähnten Akkumulatorentypen. Das Kabel dient zur Überbrückung der Distanz zwischen dem nächsten Netzanschluss und einer Abstellgelegenheit des elektrischen Rasierers. Diese Kabellänge beträgt zwischen 0.5 m und 2 m vorzugsweise 1.5 m. In einer weniger bevorzugten Variante wird die elektrische Rasierer direkt in das Netzteil mit entsprechenden Kontaktelementen eingesteckt.

Vorzugsweise werden Kontaktelemente von Typ Stecker und Buchse benutzt. Der Stecker wird vorzugsweise am Kabel des Netzteils angebracht. Aus Sicherheitsgründen wird ein Stecker verwendet, welcher innen hohl ist, und jeweils eine Phase aussen und innen am Stecker vorsieht. Dieser Aufbau vermeidet Kurzschlüsse bei der Auflage des Steckers auf einer elektrisch leitenden Oberfläche. Das kontaktierende Element des Steckers hat etwa folgende Masse (Länge 3 - 15 mm vorzugsweise 10 mm / Durchmesser 2 - 10 mm vorzugsweise 5.5 mm ).

Das als Buchse ausgebildete Kontaktelement ist vorzugsweise im elektrischen Rasierer angebracht. Vorzugsweise verfügt die Buchse (z.B. mittels eines Pins) über die Möglichkeit, neben dem Stecker auch durch andere elektrisch leitende Bauteile (z.B. im)Deckel kontaktiert zu werden. Dieser Pin sollte aus diesem Grund über eine minimale Durchmesser von 1 - 4 mm vorzugsweise 2.4 mm verfügen. Der Pin ist vorzugsweise mit dem (+) Pol des Motors und des Akkumulators verbunden. Mit dem Kontaktelement wirkt vorzugsweise ein Schalter zusammen, welcher beim Ladevorgang den Verbraucher abkoppelt und nur den Akkumulator lädt.

Um die Kosten tief zu halten sind, die Steckkontakte vorzugsweise in Masse produzierte Teile. Die metallischen Oberflächen der Kontaktelemente sind in der Regel oberflächenbeschichtet (z.B. Gold, Nickel, Chrom etc.). Ein Nickelschicht garantiert einerseits eine gute elektrische Leitfähigkeit und eine besonders gute Korrosionsresistenz gegen das aggressive Rasierschaum-Wassergemisch bei geringen Gestehungskosten. Die Buchse wird in der Regel in ihren Ausmassen gleich gross oder kleiner gewählt wie der Durchmesser des Akkumulators, so dass die Dimensionen des Innenraumes minimiert werden, können. (Aussenmasse: Breite/Höhe der Buchse beim Einsatz eines Akkumulatoren Grösse AAA vorzugsweise kleiner als 10.5 mm, Länge abhängig vom gewählten Steckweg, Akkumulatoren Grösse AA kleiner 14.5 mm).

Der Steckvorgang wird vorzugsweise mit einer deutlichen Bewegung (Translation, Rotation oder einer Kombination davon) von 1 - 10 mm und/oder 10 - 180° vorzugsweise des Steckers bezüglich der Buchse ausgeführt. Dies erlaubt bei Verschmutzung und Korrosion ein gewisses Scheuern der Kontaktflächen, welches eine selbstreinigende Wirkung hat und damit die Kontaktierung erleichtert. Während dem Steckvorgang ist zwischen den zu kontaktierenden Flächen ein gewisser Druck zu erzeugen (z.B. mittels Federwirkung einer kontaktierenden Fläche auf die andere), damit können Verschmutzungen ebenfalls wirkungsvoll weggeschabt werden. Der Steckvorgang wird also vorzugsweise mittels einer Kombination von Bewegung und gegenseitigem Druck der Kontaktierungsflächen ausgeübt. Am Ende des Steckweges soll der Stecker in der Buchse einrasten, so dass ein selbständiges Lösen des Steckers oder Wackelkontakte zwischen Stecker und Buchse verhindert werden. Die zum Lösen des Steckers nötige Kraft ist vorzugsweise grösser als das Eigengewicht des kompletten elektrischen Rasierers in Zugrichtung des Steckers. Vorzugsweise verfügt die Buchse über eine formschlüssige Verrastung mit ihrer Trägereinheit, z.B. der Leiterplatte, damit die Steckkräfte nicht auf den z.B. gelöteten elektrischen Kontakten ruhen.

Da bei oben definiertem Steckvorgang gewisse Kräfte ausgeübt werden, ist darauf zu achten, dass fragile Komponenten des elektrischen Rasierers keinen Schaden erleiden. Insbesondere ist darauf zu achten, dass der Benutzer sich nicht an den Klingen schneidet oder schwingungsdämpfende Mittel im Halsbereich nicht durch die entstehenden Kräfte deformiert werden. Aus diesem Grund sollen die Kontaktelemente am oder im Handgriff so positioniert werden, dass der Handgriff noch genügend Platz zur Verfügung hat, um diesen mit der anderen Hand komfortabel zu halten. Diesbezüglich ist es wünschenswert, die Kontaktelemente am einen oder anderen Ende des Handgriffes zu positionieren. Zusätzlich sollen dem Benutzer die Haltepunkte im Griffbereich, an den elektrischen Rasierer während dem Steckvorgang gehalten werden sollte, gekennzeichnet werden. Dazu können geometrische Elemente wie (Dellen, Noppen, Oberfächentexturen etc.), und/oder Zonen mit Weichmaterialien und/oder ein entsprechender Aufdruck dienen.

Die Steckrichtung wird in einem Winkel zwischen -90° und 90° zur Längsachse des Griffteiles vorgeschlagen, vorzugsweise wird aber in Richtung dieser Hauptachse gesteckt, damit mit der anderen Hand wie oben erwähnt die Steckkräfte am besten aufgefangen werden können.

Der Steckvorgang kann vereinfacht werden, indem die Kontaktelemente einen rotationssymmetrischen, vorzugsweise kreisrunden Querschnitt aufweisen. Die relative Lage der Steckkontakte spielt somit keine Rolle und muss vom Benutzer nicht gesucht werden. Einzig die Steckrichtung muss stimmen. In den gezeigten Ausgestaltungsvarianten ist die Steckrichtung vorzugsweise parallel zur Öffnungsrichtung des Verschlusses vorgesehen.

Die Lage der Kontaktelemente bezüglich des elektrischen Rasierers ist entscheidend bezüglich Verschmutzungstendenz, Abdichtung des Innenraumes, Steckvorgang bei Laden und Komfort im Gebrauch des elektrischen Rasierers. Vorzugsweise wird der elektrische Rasierer mit vorzugsweise aus Weichkomponente gebildeten Geometrieelementen an der Aussenhülle ausgestattet, damit die Ablageposition nach dem Gebrauch für den Benutzer eindeutig definiert ist. Neben einer oder allenfalls mehrerer eindeutigen horizontal liegenden Ablagepositionen, soll bei dieser ein abgeflachtes Griffteil eingeschlossen sein, bei welcher der elektrische Rasierer eine mehr oder weniger vertikale Position einnimmt.

Vorzugsweise werden die Kontaktelemente im Inneren oder in einer Randschicht der elektrischen Rasierer eingebracht und mit einem Dichtelement abgedichtet, z.B. einer schützenden Kunststoffschicht aus Weich- oder Hartkomponente oder einer Kombination davon überdeckt. Bei dieser Ausgestaltungsvariante kann die Oberfläche des Griffteils geschlossen mit Kunststoffen bedeckt werden, so dass während der Rasur keine Druckstellen auf der Handfläche entstehen können. Die Kontaktelemente sind ebenfalls besser gegen Verschmutzung geschützt.

Die Kontaktelemente sind im eigentlichen Hohlraum des elektrischen Rasierers an einem für den Benutzer leicht zugänglichen Ort, vorzugsweise in unmittelbarer Nähe der Trennlinie zwischen Griffteil und Verschluss, platziert. Der ganze Hohlraum einschliesslich des Kontaktelements wird mit einem Dichtelement, z.B. einem Verschluss, dichtend abgeschlossen. Das Dichtelement kann in einem Arbeitsgang mit dem elektrischen Rasierer aus derselben Hart- und Weichkomponente, möglicherweise nur aus der Weichkomponente hergestellt werden. Es wird optional eine permanente Verbindung zwischen dem Dichtelement und dem Rasierergriff vorgesehen, z.B. in Form eines Filmscharniers. Die Kontaktelemente werden an einer festen Trägereinheit aus Kunststoff oder einer Leiterplatte fixiert und elektrisch mit den Akkumulatoren (z.B. mittels Leiterbahnen oder Kabeln etc.) verbunden. Diese feste Trägereinheit kann noch weitere Funktionseinheiten wie Schalter, Antrieb und Akkumulator etc. enthalten. Vorzugsweise besteht sie aus einer Leiterplatte mit den fest damit verbundenen Kontaktelementen, dem Akkumulator und weiteren Bauteilen der Schaltung, z.B. Leiterbahnen, Widerstand. Diese sogenannte Akkumulatorenbaugruppe ist ein in sich abgeschlossenes System, das gegen aussen wie eine wiederaufladbare Batterie mit integrierten Steckkontakten wirkt. Diese Baugruppe kann wie eine gewöhnliche Einwegbatterie verwendet werden. Die Pole des Energiespeichers sind direkt bzw. über das Kontaktelement von aussen zugänglich.

Um die Handlichkeit des elektrischen Rasierers zu optimieren, wird vorgeschlagen die Kontaktelemente in Serie mit dem Akkumulator (d.h. hintereinander) an der Trägereinheit zu platzieren. Der Durchmesser des Innenraumes entspricht damit in etwa der Grösse des Akkumulators plus Trägereinheit. In den Ausgestaltungsvarianten, bei denen ein Akkumulator der Grösse AAA eingesetzt wird, entsprechen der Durchmesser der AAA Batterie und die Dicke der Trägereinheit mit Leiterplatte und Akkumulator in etwa dem Durchmesser einer AA Batterie. Die oben beschriebene minimale Akkumulatorenbaugruppe kann so mit wenig Aufwand durch eine AA Batterie ersetzt werden. Mit wenig Änderungen (Überbrückung der Längendifferenz) kann somit der elektrische Rasierer mit einer Einweg AA Batterie betrieben werden. Des weiteren können dieselben Spritzgusswerkzeuge zur Herstellung eines wiederaufladbaren elektrischen Rasierers und eines Rasierers mit einem Einweg-Energiespeicher verwendet werden.

Die Gefahr der Verschmutzung der Kontaktelemente besteht nicht, da der Innenraum nur zur Ladung des Akkumulators geöffnet wird. Es muss jedoch gewährleistet sein, dass das Gerät bei geöffnetem Hohlraum, z.B. während des Ladevorgangs, nicht benutzt werden kann, da der Hohlraum in diesem Zustand über keinerlei Dichtung verfügt. Bei dieser Ausgestaltungsvariante werden die anderen technischen Komponenten (wie Antrieb, Akkumulator etc.) vorzugsweise mittels einer nicht notwendigerweise wasserdichten Blende (z.B. mit einem montierten Kunststoffteil oder einer selbstklebenden Kunststoffetikette) abgedeckt. Die Blende erlaubt während des Ladevorgangs einen Schutz gegen Spritzwasser in der Nasszelle und zeigt dem Benutzer eindeutig die Kontaktelemente, welche davon nicht abgedeckt sind. Andere technische Einheiten, welche den Benutzer verwirren könnten, sind nicht sichtbar.

Die Akkumulatorenbaugruppe besteht in ihrer Minimalanforderung aus Akkumulator, Widerstand und Trägereinheit z.B. in Form einer Leiterplatte. Wenn das Kontaktelement nicht in den Körper (Verschluss, Griffteil) eingegossen ist, ist auch das Kontaktelement vorzugsweise Bestandteil der Akkumulatorenbaugruppe, die somit eine oder mehrere Einwegbatterien ersetzen kann. Diese Baugruppe kann falls nötig mit weiteren Komponenten ergänzt werden, z.B. mit Schaltelementen, Timerfunktion, Motor, LED. Der eingesetzte Widerstand verhindert das Überladen des Akkumulatoren und erlaubt einen konstanten Ladestrom ab dem Netzteil. Beim Einsatz eines bevorzugten Netzteils mit einer Ausgangsleistung von unbelastet 7 Volt DC und belastet 4 Volt DC bei 230 mA ergeben sich bei verschiedenen Zellenkapazitäten je nach Ausführungsvariante beispielhaft folgende Widerstandswerte:

| Zellenkapazität (mAh) | Ladestrom (mA) | Widerstand (Ohm) |
|---|---|---|
| 600 | 60 | 120 |
| 1500 | 150 | 47 |
| 2300 | 230 | 22 |

Der Widerstand wird vorzugsweise eher höher gewählt als nötig, damit auch ,fremde' Netzteile mit einem höheren Ladestrom eingesetzt werden können, ohne dem Akkumulator zu schaden.

Die Ladelogik ist ein wesentlicher Bestandteil der gesamten Ladetechnik. Die erfindungsgemässe Ausgestaltung erlaubt die einwandfreie Ladung des Akkumulatoren sowie die differenzierte Einschränkung des Betriebes des elektrischen Rasierers während verschiedenen Betriebszuständen in Abhängigkeit der Abdichtung des Innenraumes. Dies wird unten mit Bezug auf beschrieben.

In einer weiteren vorteilhaften Variante ist eine Haltevorrichtung für den Nassrasierer, z.B. in Form eines Ständers, vorgesehen. Der darin eingesteckte Rasierer ist so positioniert, dass die Kontaktelemente nicht in Fliessrichtung des Wassers bzw. an den Abtropfpunkten positioniert sind. Der Ladevorgang soll auch möglich sein, wenn der Benutzer die Haltevorrichtung nicht dabei hat. Die Haltevorrichtung ist entweder rein mechanisch, dient dem, elektrischen Rasierer nur als Abstütz- und Positionshilfe und enthält keine elektrischen Komponenten. Bei dieser Ausgestaltungsvariante ist sicherzustellen, dass die Kontaktelemente frei zugänglich sind, falls der elektrische Rasierer auf der Haltevorrichtung platziert ist. In einer anderen Variante enthält die Haltevorrichtung zusätzliche elektrische Elemente, z.B. Zeitmesseinheit, Ladezustandsanzeige, Ladekapazitätsanzeige, Musik. Diese zusätzlichen elektrischen Elemente werden durch dasselbe Kontaktelement gespeist wie der elektrische Rasierer selber, d.h. sie funktionieren vorzugsweise mit derselben Betriebsspannung wie der Rasierer. Die Haltevorrichtung ist nur ein ,elektrisches Zwischenstück', welches entweder benutzt werden kann oder nicht. Auf Reisen kann der Rasierer bei dieser Ausgestaltungsvariante ebenfalls direkt mit dem Netzteil geladen werden. Folglich verfügt die Haltevorrichtung über die gleichen Steckkontakte wie das Netzteil und der elektrische Rasierer. In einer Verkaufseinheit befindet sich die elektrische Rasierer einschliesslich des Netzteils mit je nach Ausgestaltungsvariante eventuell zusätzlichen Wechselklingen / und optional der Haltevorrichtung. Das Netzteil inkl. Elementen für den Netzanschluss und die eingesetzten Kontaktelemente für den Anschluss an den Elektrorasierer sind vorzugsweise in einer Sichtpackung präsentiert, um dem Benutzer zu zeigen, dass es sich um einen wiederaufladbaren Rasierer handelt. Als zusätzliche Option kann auch ein Deckel geöffnet präsentiert werden, so dass der Benutzer sofort erkennt, wie der elektrische Rasierer wiederaufgeladen werden kann.

Die Erfindung wird im Folgenden beispielhaft unter Bezugnahme auf die Zeichnung beschrieben. Es zeigen:
- Fig. 1a-c: Verschiedene perspektivische Ansichten eines Rasierers;
- Fig. 2a,b bis Fig. 5a-d: einen Rasierer in verschiedenen Stadien seiner Herstellung sowie verschiedenen Ansichten;
- Fig. 6a-c: eine vergrösserte Darstellung der Anordnung und Funktionsweise des Schaltelements eines Rasierers;
- Fig. 7a, b: eine vergrösserte Darstellung des rückwärtigen Endes des Griffbereichs;
- Fig. 8a, b: eine Motorenbaugruppe vor dem Anbringen an die Hartkomponente
- Fig. 9a-c: einen Rasierer mit einem wiederaufladbaren Energiespeicher;
- Fig. 10a, b: eine Akkumulatorenbaugruppe zum Ersatz einer Einwegbatterie;
- Fig. 11: ein Verkaufsset, bestehend aus Rasierer, Auswechselklingen und Netzteil;
- Fig. 12a-c: Schaltbilder der Ladeschaltung;
- Fig. 13: eine Prinzipskizze des Herstellungsverfahrens.

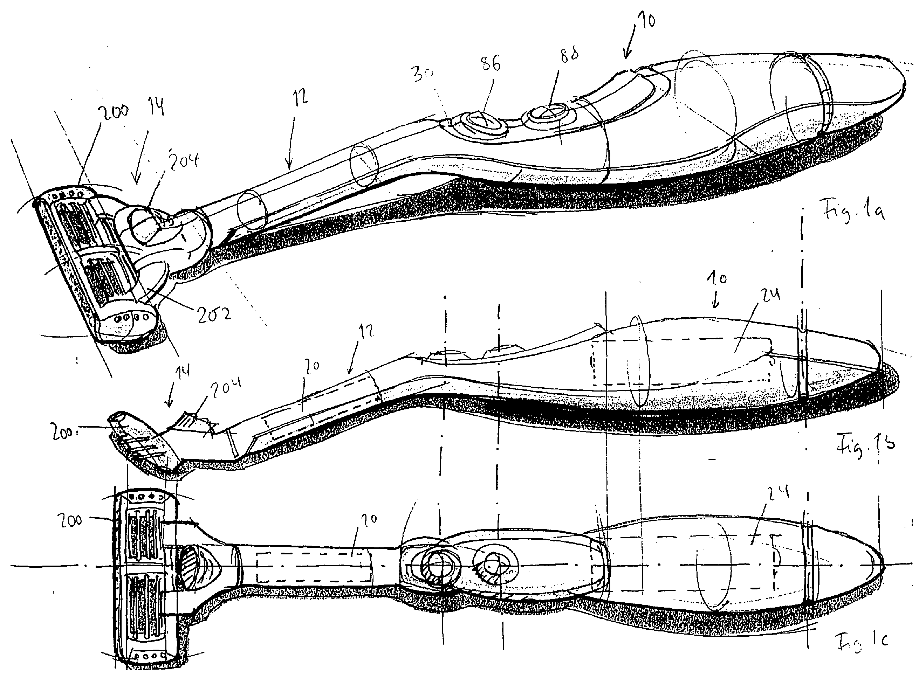

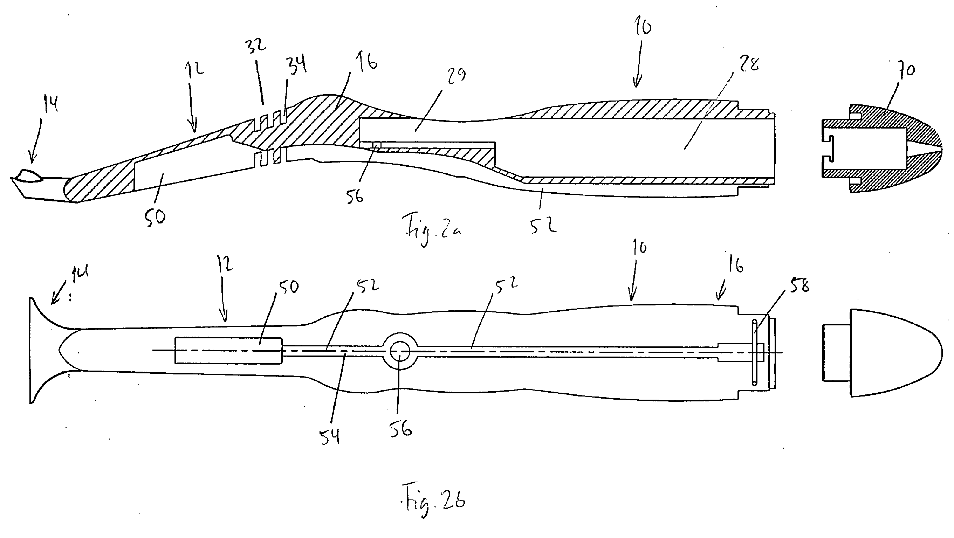

Fig. 1a-c zeigen einen erfindungsgemässen Rasierer in perspektivischer Darstellung schräg von der Seite (Fig. 1a), von der Seite (Fig. 1b) und von oben (Fig. 1c). Der Rasiererkörper umfasst einen Kopfbereich 14 mit einem auswechselbaren Klingenelement 200, das über eine Haltevorrichtung 202 mit einem durch ein Betätigungselement 204 zu betätigendem Wechselmechanismus am Körper gehalten wird. Wie in Fig. 1b und 1c angedeutet und in Fig. 2-5 näher dargestellt, befindet sich im Halsbereich eine elektrisch betriebene Funktionseinheit in Form einer Vibrationseinrichtung, insbesondere eines Motors mit einem Exzenter. Im Griffbereich 10 ist ein Schaltbereich 30 mit zwei Schaltpunkten 86, 88 erkennbar, der zum An- und Ausschalten der Funktionseinheit 20 dient. Im Inneren des Griffbereichs 10 befindet sich ein hier ebenfalls nur angedeuteter Energiespeicher 24. Insbesondere Fig. 1b zeigt den gegenüber dem Griffbereich 10 deutlich abgewinkelten Halsbereich 12. Der ergonomisch geformte Griffbereich 10 ist ebenfalls erkennbar.

Die im Folgenden zunächst anhand der Fig. 2 bis 5 beschriebene Variante betrifft ein bevorzugtes erfindungsgemäßes Herstellungsverfahren, bei dem zunächst eine Kunststoff-Hartkomponente 16 des Rasiererkörpers ohne Funktionsbauteile gespritzt wird.

Fig. 2a, b zeigen die fertig gespritzte Hartkomponente 16, bei der bereits ein Griffbereich 10, ein Halsbereich 12 sowie ein Kopfbereich 14 ohne Wechselklinge 200 ausgebildet sind. Des Weiteren wird ein Deckel 70 separat hergestellt. Dieser kann auf den Griffbereich 10 aufgesetzt werden, um einen zur Aufnahme eines Energiespeichers in Form einer Einwegbatterie oder eines wiederaufladbaren Akkumulators vom Typ AA oder AAA dienenden Hohlraum 28 im Griffbereich 10 zu verschliessen. Der Kopfbereich dient zur Aufnahme einer hier nicht weiter besprochenen Haltevorrichtung für die Wechselklingen 200. Sie kann bei Bedarf betätigt werden, um Klingen auszuwechseln. Die Wechselklingen 200 verfügen vorzugsweise über schwingungsdämpfende Elemente aus einer Weichkomponente, damit sich die Schwingungen vor allem auf die Klingen auswirken. Aus dem gleichen Grund wird die Klinge 200 federnd gegenüber dem Griffbereich 10 aufgehängt.

Der den Kopfbereich 14 und den Griffbereich 10 auf Abstand haltende Halsbereich 12 weist bevorzugt eine Länge im Bereich von 10 mm bis 40 mm und insbesondere von etwa 30 mm auf. Der den Griffbereich 10 und den Kopfbereich 14 miteinander verbindende Halsbereich 12 ist gegenüber dem Griffbereich 10 und dem Kopfbereich 14 mindestens teilweise verjüngt und vorzugsweise etwas abgewinkelt, wie aus der die Seitenansicht zeigenden Fig. 2a zu erkennen ist. Der Winkel des Halsbereiches 12 (definiert durch die Achse des Motors) gegenüber dem Griffbereich (definiert durch die Achse der Batterie)beträgt zwischen 10° - 60° vorzugsweise etwa 30°. Der Winkel zwischen Halsbereich und Kopfbereich beträgt ebenfalls etwa 10° - 60° vorzugsweise ebenfalls etwa 30°. Der Griffbereich mit Deckel hat eine Länge von 80 - 160 mm vorzugsweise etwa 130mm. Der Kopfbereich hat eine Länge von 5 - 20mm vorzugsweise etwa 10mm.

Die Hartkomponente 16 umfasst ferner eine im Halsbereich 12 im Querschnitt U-förmig ausgebildete Ausnehmung 50 für eine Vibrationseinrichtung. Im Übergangsbereich zwischen Halsbereich 12 und Griffbereich 10 sind Ausnehmungen 34 ausgebildet, die Bestandteil eines Vibrationsdämpfungsbereiches 32 sind (in der Ansicht von unten Fig. 2b nicht dargestellt). Des weiteren ist ein sich von dem vorderen Hohlraum 50 bis in den Bereich des hinteren Endes erstreckender, längsseitig offener, an der Unterseite des Rasierers verlaufender Kanal 52 für elektrische Verbindungsleitungen sowie ein Hohlraum 29 zur Betätigung eines nicht dargestellten Schaltelementes vorhanden. Der letztgenannte Hohlraum 29 steht über einen Durchbruch 56 mit dem in diesem Bereich erweiterten Kanal 52 sowie mit dem zur Aufnahme der Batterie dienenden Hohlraum 28 in Verbindung.

Die Hartkomponente 16 weist des Weiteren im Bereich des hinteren Endes eine Ausnehmung 58 für einen U-förmigen Kontaktbügel auf.

Auf die vorstehend erwähnten Merkmale der Hartkomponente 16 sowie auf die Funktionsbauteile der erfindungsgemäßen Rasierers wird an anderer Stelle näher eingegangen.

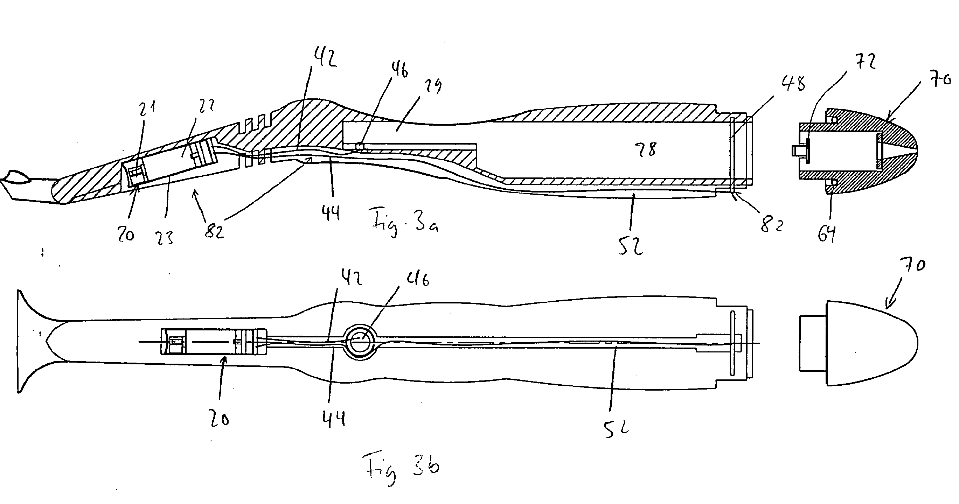

Gemäß Fig. 3a, b wird in einem nächsten Schritt eine zuvor aus einzelnen Bauteilen zusammengestellte Funktionsbaugruppe 82 an der Hartkomponente 16 fixiert. Diese Baugruppe 82 umfasst eine Vibrationseinrichtung 20 mit einem Elektromotor 22 und einen von diesem antreibbaren Exzenter 21 mit einer Länge von 1,5-5 mm und einem maximalen Durchmesser von 4-10 mm, die in einem Schutzelement, hier einer Schutzhülse 23, angeordnet sind. Mit dieser Vibrationseinrichtung 20 kann der Kopfbereich 14 des Rasierers zu Schwingungen mit einer Frequenz von 10 - 1000 Hz, vorzugsweise 200-500 Hz, angeregt werden. Die Amplitude der Kopfbereiches kann bis 2 mm, vorzugsweise 0.3 - 0.8 mm betragen. Um die Amplitude zu verstärken, können mit demselben Herstellungsverfahren metallische Teile am Grundkörper fixiert und mit der Weichkomponente mindestens teilweise umspritzt werden. Vorzugsweise sind solche metallischen Komponenten im Hals- oder Kopfbereich zwischen der Vibrationseinrichtung 20 und der Haltevorrichtung für die Wechselklingen anzubringen. Der Aufbau des Gerätes ist in einer Art vorzusehen, dass die Auslenkung der Wechselklinge nicht in allen drei Dimensionen gleich stark sind. Vorzugsweise ist die Auslenkung parallel zur Schnittrichtung am grössten vorzusehen (d.h. Auslenkung auf und ab anstatt seitliche Auslenkung).

Die Hülse 23 dient einerseits zum Schutz der Vibrationseinrichtung 20 vor Druck- und Temperatureinwirkungen der anschließend zu spritzenden Kunststoffkomponente und andererseits zur Freistellung des Exzenters 21 gegenüber dem Kunststoffmaterial dieser Komponente. Die spritzdruckresistente Hülse 23 ist aus Kunststoff, Keramik oder vorzugsweise Metall hergestellt, insbesondere aus einer vernickelten Messinglegierung. Alternativ kann die Schutzhülse 23 aus einem Kunststoff gebildet sein, dessen Schmelztemperatur oberhalb der Temperatur der anschließend zu spritzenden Kunststoffkomponente liegt. Es werden vorzugsweise verstärkte Kunststoffe eingesetzt, z.B. mit Glasfasern verstärkte Kunststoffe. Die Außenlänge der Hülse 23 beträgt etwa 10 bis 25 mm, vorzugsweise 21 mm, während der Durchmesser der Hülse 23 etwa 2 bis 10 mm, vorzugsweise 7 mm, beträgt und die Wandstärke der Hülse 23, die bis zu 3 mm betragen kann, vorzugsweise 0,5 mm beträgt. Ein optional zusätzlich angebrachter Deckel verlängert die Länge des Schutzelements (Hülse und Deckel) um 1-4 mm, vorzugsweise 3,5 mm. Falls ein Deckel vorhanden ist, ist kein Ausgiessen mit einer Schutzschicht (z.B. mit Harz)notwendig. Die Hülse 23 wird nach dem Einführen des Exzenters 21 und des Motors 22 entweder mittels eines mit Durchgängen für die Stromversorgung des Motors versehenen Deckels verschlossen oder mit einer flüssig aufgetragenen und anschliessend aushärtenden Substanz (z.B. einem Harz, Lack oder Zweikomponentenleim) ausgegossen. In Höhe des Endes des Motors 22 ist vorzugsweise an der Hülse 23 ein Anschlag vorgesehen, wodurch ein zu weites Vorschieben des Exzenters 21 während der Montage verhindert wird. Das freie Drehen des Exzenters 21 ist somit gewährleistet.

Anstatt einer Hülse können auch zwei schalenförmige Kunststoffteile, welche die Funktion von Hülse und Deckel übernehmen, eingesetzt werden. Die Montage kann mit dieser Ausgestaltungsform vereinfacht werden. Die Vibrationsvorrichtung wird mittels Haftreibung oder einem leichten Presssitz in der Ausnehmung 50 der Hartkomponente fixiert. Diese Fixierung ist so zu gestalten, dass dieses Funktionselement durch die anschliessend eingespritzte Weichkomponente nicht vom vorgesehenen Platz weggeschwemmt werden kann.

Mit der Vibrationseinrichtung 20 verbunden sind zwei elektrische Verbindungsleitungen 42, 44. Diese sind vorzugsweise in Form eines ummantelten Litzen- oder Einzeldrahtes aus Kupfer vorgesehen, wobei der Drahtdurchmesser, der bis zu 1 mm betragen kann, bevorzugt 0,3 mm beträgt. Die Dicke der Ummantelung liegt im Bereich von 0,1 bis 0,5 mm und beträgt vorzugsweise 0,2 mm. Hierdurch ist die Ummantelung sicher gegen das so genannte Abschwemmen während des Umspritzens mit dem Kunststoff geschützt, so dass selbst dann, wenn die elektrischen Leitungen 42, 44 aufgrund des Spritzdruckes verschoben werden, kein Kurzschluss auftreten kann.

Eine elektrische Leitung 42 ist relativ kurz ausgeführt und reicht bis zu dem Durchbruch 56 zwischen dem erweiterten Bereich des Kanals 52 und dem mittleren Hohlraum 29 Hierzu ist die kurze Leitung 42 in diesem Ausführungsbeispiel mit einem als axiale Verlängerung der Leitung 42 ausgebildeten, stiftartigen Kontaktelement, dem Kontaktstift 46 versehen. Der Kontaktstift 46 ist aus Metall, vorzugsweise aus einer vernickelten Messinglegierung, hergestellt. Über ein an anderer Stelle näher beschriebenes Schaltelement kann der Kontaktstift 46 mit dem einen Pol eines im hinteren Hohlraum 28 anzuordnenden Energiespeichers verbunden werden. Der Kontaktstift 46 ist vorzugsweise mit dem kurzen Kabel 42 fest verbunden (z.B. verlötet) und somit ein Teil der Motorenbaugruppe 82.

Zur Kontaktierung mit dem anderen Pol des Energiespeichers dient die längere Verbindungsleitung 44, die bis zu der im hinteren Bereich ausgebildeten Ausnehmung 58 reicht und im Kanal 52 ausserhalb des hinteren Hohlraums 28 geführt ist. Im Bereich der Ausnehmung 58 kontaktiert die Verbindungsleitung 44 einen Kontaktbügel 48. Bei aufgesetztem Deckel 70 kontaktiert dieser über einen Kontaktabschnitt 72 den entsprechenden Pol des Energiespeichers.

Bevorzugt sind die elektrischen Leitungen 42, 44 als Bestandteile der vorgefertigten Baugruppe 82 jeweils bereits auf die benötigte Länge vorkonfektioniert. Die freien Enden der Leitungen 42, 44 können ferner bereits abisoliert und verzinnt sein, was insbesondere dann von Vorteil ist, wenn zur Kontaktierung mit weiteren elektrischen Funktionsbauteilen keine Lötverbindungen, sondern kraftschlüssige Verbindungen vorgesehen sind.

Bevorzugt ist die Funktionseinheit bereits vor dem Einsetzen in den Rasiererkörper und vor dem Umspritzen mit der Weichkomponente montiert. Beispielsweise sind der Kontaktstift 46 und der U-förmige Kontaktbügel 48 bereits mit den Kabelenden fest verbunden, insbesondere verlötet. Hierdurch werden Fertigungsunsicherheiten ausgeschlossen.

Um die Leitungen 42, 44 an der Hartkomponente 16 zu fixieren, ist der Kanal 52 zwischen dem Vibrationsdämpfungsbereich 32 und dem erweiterten Kanalbereich mit Fixierungselementen für die elektrischen Verbindungen ausgebildet (nicht dargestellt). Durch diesen beispielsweise als Labyrinth ausgebildeten Haltebereich 54 sind die Leitungen 42, 44 gegen ein Herausfallen gesichert sowie gegen Zug gesichert. Alternativ können Kanalverengungen, Hinterschneidungen oder separate Elemente aus Metall oder Kunststoff zur Fixierung verwendet werden. Alternativ können die elektrischen Komponenten thermisch und/oder mechanisch mit der Hartkomponente verschmolzen und damit fixiert werden.

Der Kontaktstift 46 und der Durchbruch 56 sind derart aufeinander abgestimmt, dass der im mittleren Bereich gelegene Hohlraum 29 gegen das Eindringen von Kunststoff der anschließend zu spritzenden Komponente von unten abgedichtet ist.

Vor dem Spritzen der nächsten, vorzugsweise weichen Komponente wird in die am hinteren Ende ausgebildete Ausnehmung 58 der bereits erwähnte, U-förmige Kontaktbügel eingeführt, insbesondere kraftschlüssig eingepresst, wodurch die lange Verbindungsleitung 44 auch an ihrem freien Ende fixiert ist. Der Kontaktbügel ist aus Metall, vorzugsweise aus einer vernickelten Messinglegierung, hergestellt.

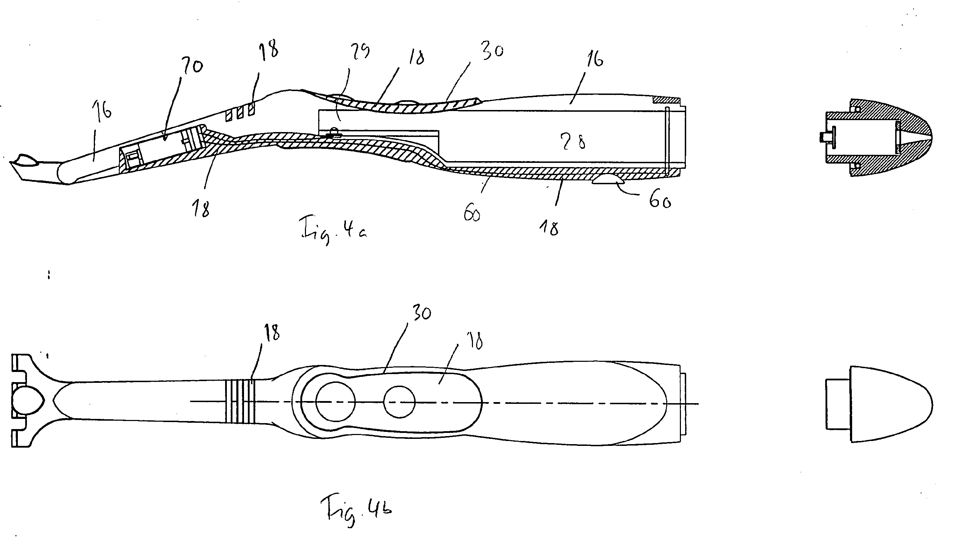

Fig. 4a, b zeigen den erfindungsgemäßen Rasierer nach dem Spritzen der nächsten Komponente, hier einer Weichkomponente 18 im Schnitt bzw. von oben. Das Spritzen der Weichkomponente 18 erfolgt in einer zweiten Kavität (Formnest) des Spritzgiesswerkzeugs, in welche die Hartkomponente 16 nach dem Bestücken mit den vorstehend beschriebenen Funktionsbauteilen (Vibrationseinrichtung 20 aus Hülse 23, Exzenter 21, gegebenenfalls Hülsendeckel und Motor 22, elektrische Leitungen 42, 44, Kontaktstift 46 sowie Kontaktbügel 48) eingelegt wird.

Die Weichkomponente 18 überdeckt diese an der Hartkomponente 16 angeordneten Funktionsbauteile, d.h. diese Funktionsbauteile werden direkt mit dem die Weichkomponente 18 bildenden Kunststoff umspritzt.

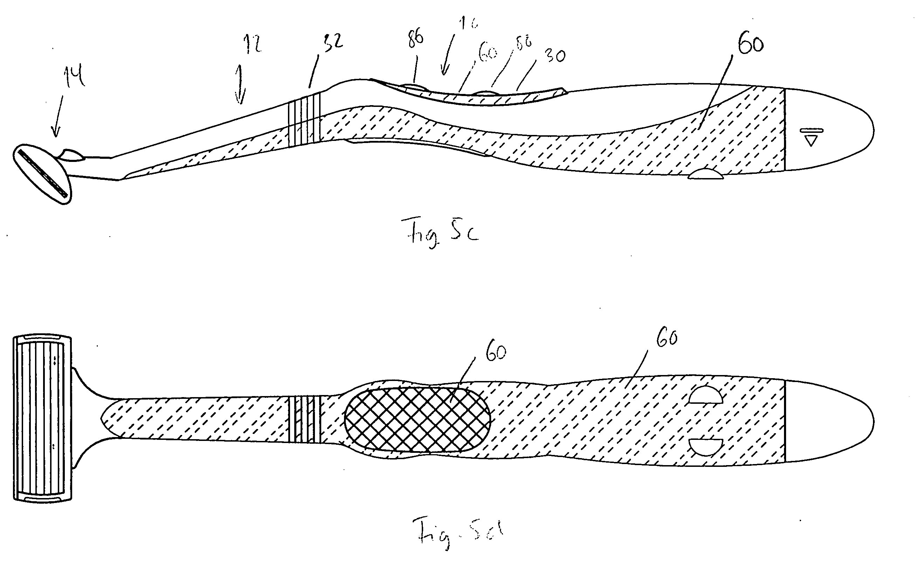

Durch das Spritzen der Weichkomponente 18 wird der im mittleren Bereich vorgesehene Hohlraum 29 nach oben geschlossen. Der weichelastische Kunststoff der Weichkomponente 18 bildet hier einen durch Betätigung von außen in den Hohlraum 29 eindrückbaren Schaltbereich 30, der an seiner Aussenseite zwei Schaltpunkte 86, 88 aufweist, denen auf der Innenseite zwei in den Hohlraum 29 hinein vorstehende Schaltvorsprüngen 31 entsprechen (siehe Fig. 6a). Die Bildung dieses auch als Schaltmembran bezeichneten Schaltbereiches 30 erfolgt mit Hilfe eines nicht dargestellten Formkerns des Spritzgiesswerkzeugs, der während des Spritzens der Weichkomponente 18 in den Hohlraum 29 eingeführt ist. Die weichelastischen Eigenschaften des Schaltbereiches 30 ermöglichen eine problemlose Zwangsentformung durch Herausziehen des Formkerns nach hinten, wodurch der nachgiebige Schaltbereich 30 über die Schaltvorsprünge 31 nach außen gedrückt wird und anschließend aufgrund seiner Elastizität wieder die in Fig. 3 gezeigte Normalstellung einnimmt.

Die Shore-Härte A der Weichkomponente liegt vorzugsweise unter 70, vorzugsweise unter 40, und beträgt insbesondere etwa 35. In diesem Bereich hat die Weichkomponente die optimalen Eigenschaften für die Funktion der Dämpfungselemente und Dichtelemente sowie für den Schaltbereich zur Betätigung des Schalters.

Des Weiteren wird durch das Spritzen der Weichkomponente 18 der Vibrationsdämpfungsbereich 32 vervollständigt, indem die entsprechenden Ausnehmungen 34 der Hartkomponente 16 mit dem Kunststoff der Weichkomponente 18 gefüllt werden.

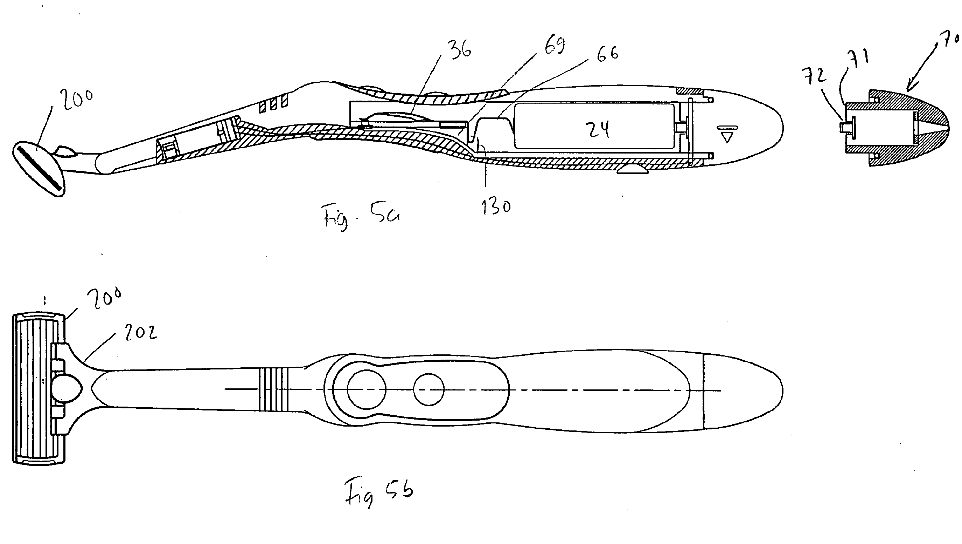

Wie in Fig. 4a, b sowie Fig. 5c, d angedeutet, können durch das Spritzen der Weichkomponente 18 außerdem weitere Funktionsbereiche 60 gebildet werden, die vorzugsweise als zusätzliche Dämpfungsbereiche im Bereich der Fingerund/oder Handauflage oder als Stütznoppen ausgebildet sind und beispielsweise in Form von Lamellen, kleinen Polstern oder grundsätzlich beliebig ausgestalteten, sich wiederholenden Mustern vorgesehen sein können.

Ferner wird durch das Spritzen der Weichkomponente 18 an der nach vorne weisenden Stirnseite des Deckels 70 eine umlaufende Dichtlippe 64 oder ein O-Ring ausgebildet, die eine wasserdichte Anbringung eines Abschlussdeckels ermöglicht.

Das Eindringen der Weichkomponente 18 in den mittleren Hohlraum 29 von unten wird durch den mit dem Ende der kurzen elektrischen Leitung 42 verbundenen Kontaktstift 46 verhindert, der den Durchbruch 56 verschließt. Zur Abstützung des Kontaktstiftes 46 während des Spritzens der Weichkomponente dient der vorstehend erwähnte, in den Hohlraum eingeführte Formkern des Spritzgiesswerkzeugs.

Die Funktionen des weichelastischen Materiales (Überspritzen von Funktionsbauteilen, Vibrationsdämpfung, Schaltbereich, Oberflächentextur, Dichtung, Betätigungsfeld für den Wechselmechanismus etc.) werden vorzugsweise mit genau einem Material ab wenigstens einem Einspritzpunkt realisiert. Alternativ und aus Kostengründen weniger bevorzugt können verschiedene Funktionen mittels verschiedener Materialien, z.B. mit verschiedenen Shore A Härten oder Farben, über verschiedene Anspritzpunkte realisiert werden.

Nach dem Spritzen der Weichkomponente 18 wird ein Schaltelement 36 (Frosch) von hinten in den Hohlraum 29 eingeführt (siehe Fig. 5a). Der Frosch 36 wird an einem Tragabschnitt 69 der Hartkomponente 16 einfach durch Aufstecken auf die Hartkomponente fixiert.

In einem nächsten Schritt wird ein Energiespeicher 24, insbesondere eine Batterie vom Typ AAA oder AA(1,5 V) oder eine Akkumulatorenbaugruppe, von hinten in den hierfür vorgesehenen Hohlraum 28 eingeführt (Fig. 5a). Als Längenausgleich und zur Kontaktierung des einen Batteriepoles dient ein am hinteren Ende des Frosches 36 ausgebildeter Federabschnitt 66. Auf der Höhe des Federabschnittes 66 sind an der Innenseite der Hartkomponente mindestens ein, vorzugsweise drei bis vier Elemente 130 angeformt, welche einen Anschlag für die Batterie 24 (Einwegbatterie oder Akkumulatorenbaugruppe) darstellen. Mit dieser Ausgestaltung kann der Federweg der Batterie 24 genau eingestellt werden. Bei einem Sturz der Bürste aus grösserer Höhe verhindern die Elemente 130 das Überbiegen des Federelementes 66 durch die Batterie.

Wie in Fig. 5a-d dargestellt, wird in einem nächsten Schritt auf das hintere Ende des Rasiererkörpers ein Deckel 70 aufgesetzt. Bei dem Deckel 70 handelt es sich um eine vormontierte Baugruppe, die einen elektrisch leitfähigen Kontaktabschnitt 72 umfasst, über den im montierten Zustand eine elektrische Verbindung zwischen dem anderen Pol der Batterie 24 einerseits und dem zuvor in die Ausnehmung 58 der Hartkomponente 16 eingesetzten und anschließend mit der Weichkomponente 18 umspritzten Kontaktbügel 48 hergestellt wird, womit die elektrische Verbindung aller beteiligten Funktionsbauteile komplettiert ist.

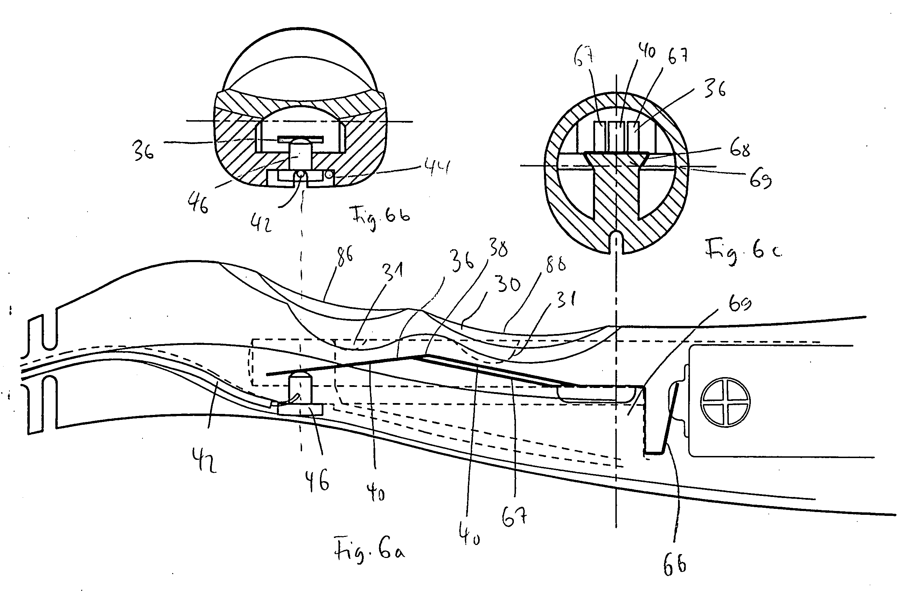

Die Verbindung zwischen dem Deckel 70 und dem hinteren Ende des Rasiererkörpers erfolgt bevorzugt nach Art eines Bajonettverschlusses, worauf in Verbindung mit Fig. 7a, b näher eingegangen wird. Alternativ kann die Verbindung z.B. durch andere geeignete Mittel wie beispielsweise durch Verrasten oder durch ein Gewinde erfolgen.

Anschliessend erfolgt die Montage einer vorgefertigten Wechselklinge 200 und einer entsprechenden Haltevorrichtung 202. Die Befestigung der Haltevorrichtung 202 am Kopfbereich 14 kann grundsätzlich durch beliebige geeignete Mittel wie beispielsweise Stecken, Verrasten, Verkleben, Umspritzen oder Verschweißen, insbesondere Ultraschallschweißen, erfolgen.

Anstatt den Kontaktstift 46 bereits vor dem Einsetzen in die Hartkomponente 16 mit der Leitung 42 zu verbinden, kann er auch in einem zusätzlichen Montageschritt separat eingeführt werden.

Fig. 6a zeigt vergrößert den Bereich des Rasiererkörpers, in welchem das Schaltelement (Frosch) 36 angeordnet ist. Fig. 6b und 6c zeigen eine teilweise geschnittene Ansicht entlang der Längsachse im Bereich des Kontaktstifts 46 bzw. des Federelements 66. Der Frosch besteht aus Metall, vorzugsweise aus vernickeltem Federstahl. Der Frosch 36 weist zwei Schenkel 40 auf, die an einem Gelenkbereich 38 gelenkig miteinander verbunden sind. Der in Fig. 6a linke Schenkel 40 dient zur Kontaktierung des Kontaktstifts 46.

Der andere Schenkel 40 des Frosches 36 ist an seinem Ende mit einem Steckabschnitt 68 (Fig. 6c) versehen, mit welchem der Frosch 36 zur Fixierung am Rasiererkörper über einen im Querschnitt schwalbenschwanzartig ausgebildeten Tragabschnitt 69 der Hartkomponente 16 geschoben wird. Zahnartige Vorsprünge am Steckabschnitt des Frosches verkeilen sich mit dem aus der Hartkomponente gebildeten Tragabschnitt. An den Steckabschnitt 68 des Frosches 36 schließt sich der bereits erwähnte Federabschnitt 66 zur Kontaktierung des einen Pols der Batterie 24 an. Ein verlängerter Federabschnitt 66 wie in Fig. 5a kann eingesetzt werden, um Längendifferenzen zwischen Einwegbatterien und Akkumulatorenbaugruppe auszugleichen.

Durch Beaufschlagen der Schenkel 40 über die an der Schaltmembran 30 ausgebildeten Schaltvorsprünge 31 kann der Frosch 36 zwischen zwei formstabilen Zuständen umgesteuert werden, um auf diese Weise die Rasierer ein- bzw. auszuschalten. Beispielsweise ausgehend von dem in Fig. 6a dargestellten Ein-Zustand wird durch Beaufschlagen des in Fig. 6a rechten Schenkels 40 der Gelenkbereich 38 nach unten bewegt, wodurch der Frosch 36 ab einer bestimmten Eindrücktiefe umschnappt und der linke Schenkel 40 nach oben springt und damit außer Kontakt mit dem Kontaktstift 46 gelangt. Entsprechendes gilt bei Beaufschlagung des in Fig. 6a linken Schenkels 40 zum Einschalten des Rasierers. Das Umschnappen des Frosches 36 wird unterstützt durch parallel zum in rechten Schenkel 40 verlaufende Arme 67, die mit dem anderen, in Fig. 6a linken Schenkel 40 verbunden sind. Aus dem gleichen Grund wird zusätzlich in der Verlängerung des Tragabschnittes unter dem Frosch aus der Hartkomponente eine Rampe gebildet nicht dargestellt).

Das in Fig. 6b dargestellte vergrößerte Detail zeigt insbesondere die mittels des Kontaktstiftes 46 hergestellte elektrische Verbindung zwischen dem freien Ende der kurzen elektrischen Leitung 42 und dem Schenkel 40 des Frosches 36. Außerdem ist die an dem Kopf des Kontaktstiftes 46 vorbei geführte lange elektrische Leitung 44 zu erkennen.

Fig. 7a, b zeigt eine Seitensicht bzw. eine Draufsicht auf das hintere Ende des Rasiererkörpers. In Fig. 7b ist insbesondere die Lage der für den U-förmigen Kontaktbügel 48 vorgesehenen Ausnehmung 58 zu erkennen. Fig. 7a zeigt, wie mittels des in die Ausnehmung 58 eingeführten Kontaktbügels 48 eine elektrische Verbindung zwischen dem freien Ende der langen elektrischen Leitung 44 und dem Kontaktabschnitt 72 des hier ansonsten nicht dargestellten Deckels 70 hergestellt wird.

Der Kontaktabschnitt 72 des Deckels 70 umfasst einen gegenüber dem Deckel vorzugsweise federnden Kontaktkopf 73 zur Kontaktierung der Batterie 24 und eine Kontaktzunge 74, die radial über einen zylindrischen Tragabschnitt 71 (Fig. 5a), von dem der Kontaktabschnitt 72 gehalten ist, vorsteht. Die Kontaktzunge 74 dient zum einen zur Kontaktierung des Kontaktbügels 48 und zum anderen zur Verriegelung des Deckels am Rasiererkörper nach Art eines Bajonettverschlusses, indem die Kontaktzunge 74 die Schenkel des U-förmigen Bügels 48 hintergreift. Der Kontaktabschnitt bestehend aus Kontaktkopf und Kontaktzunge ist vorzugsweise einstückig ausgebildet und besteht aus Metall, vorzugsweise aus vernickeltem Federstahl. Der Kontaktabschnitt ist derart im Deckel versenkt, dass der Kontaktkopf nur einen begrenzten Federweg ausführen kann. Nach einem bestimmten, zugelassenen Federweg steht die Batterie am Deckel an. Somit besteht auch hier, wie beim Frosch, eine Federwegbegrenzung, welche bei einem Sturz der Bürste aus grösserer Höhe verhindert, dass der Federkopf zu stark deformiert werden kann.

Fig. 5c, d zeigen ein bevorzugtes Design eines erfindungsgemäßen, nach dem Verfahren der Erfindung hergestellten Rasierers in verschiedenen Ansichten. In der Rückansicht Fig. 5d sind insbesondere durch Spritzen der Weichkomponente 18 hergestellte Funktionsbereiche 60, die außer als Designmerkmal zur Vibrationsdämpfung dienen und/oder für eine besonders gute Griffigkeit der erfindungsgemäßen Rasierer sorgen. Die zum Teil als Hand- bzw. Fingerauflage dienenden Funktionsbereiche mit vibrationsdämpfender Wirkung 60 sind in dem dargestellten Beispiel an der Rückseite im Griffbereich 10 in Höhe eines Zwischenbereiches zwischen dem Vibrationsdämpfungsbereich 32 und dem Schaltbereich 30 angeordnet. Ein weiterer Funktionsbereich 60 umgibt auf der Vorderseite die beiden Schaltpunkte 86, 88.

Außerdem zu erkennen ist der von der Hartkomponente und der Weichkomponente gemeinsam gebildete Vibrationsdämpfungsbereich 32 im Bereich des Übergangs zwischen Griffbereich 10 und Halsbereich 12, der in diesem bevorzugten Designbeispiel eine ringförmige Geometrie aufweist. Durch eine derartige Ausgestaltung lassen sich besonders gute Torsions-, Flexibilitäts- und Dämpfungseigenschaften erzielen.

Wie aus den Darstellungen hervorgeht, weist der erfindungsgemäße Rasierer - obwohl es sich um eine elektrisch betriebenen Rasierer handelt - eine ansprechende elegante Formgebung ohne störende Verdickungen oder unförmig wirkende Bereiche auf. Insbesondere ist der erfindungsgemäße Rasierer mit einem unter ästhetischen Gesichtspunkten besonders ansprechenden gebogenen und gegenüber dem Griffbereich verjüngten Halsbereich 12 versehen. Ein derartiges schlankes Design wird durch das erfindungsgemäße Herstellungsverfahren ermöglicht, ohne dass dies zu Zugeständnissen hinsichtlich Aufwand und Zeitbedarf bei der Herstellung des Rasierer führen würde.

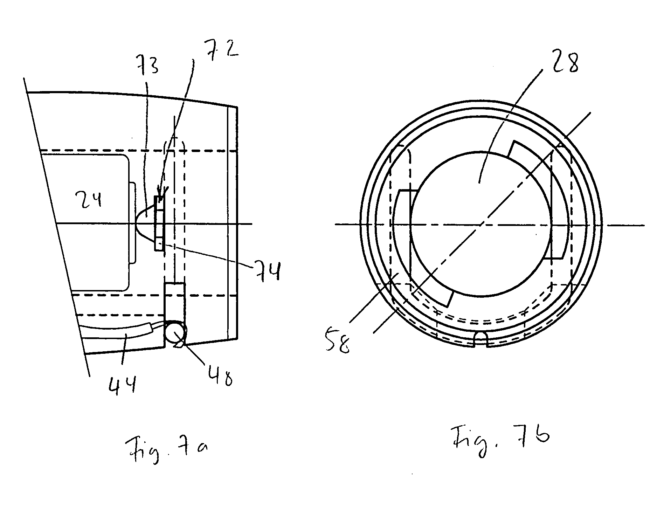

Fig. 8a, b zeigen in Seiten- bzw. Frontansicht jeweils die vorkonfektionierte Baugruppe 82, bestehend aus der Vibrationseinrichtung 20 mit Hülse 23, zwei Leitungen 42, 44, dem mit der kurzen Leitung 42 verbundenen Kontaktstift 46 und dem mit der langen Leitung 44 verbundenen Kontaktbügel 48. Die Hülse 23 ist mit einem Deckel 23' verschlossen. Leitungen 42, 44 sind durch Aussparungen im Deckel 23' nach aussen geführt. Die Motorenbaugruppe 82 wird vor dem Spritzen der Weichkomponente 18 zusammengebaut, z.B. gelötet, und an der zuvor gespritzten Hartkomponente 16 angeordnet.

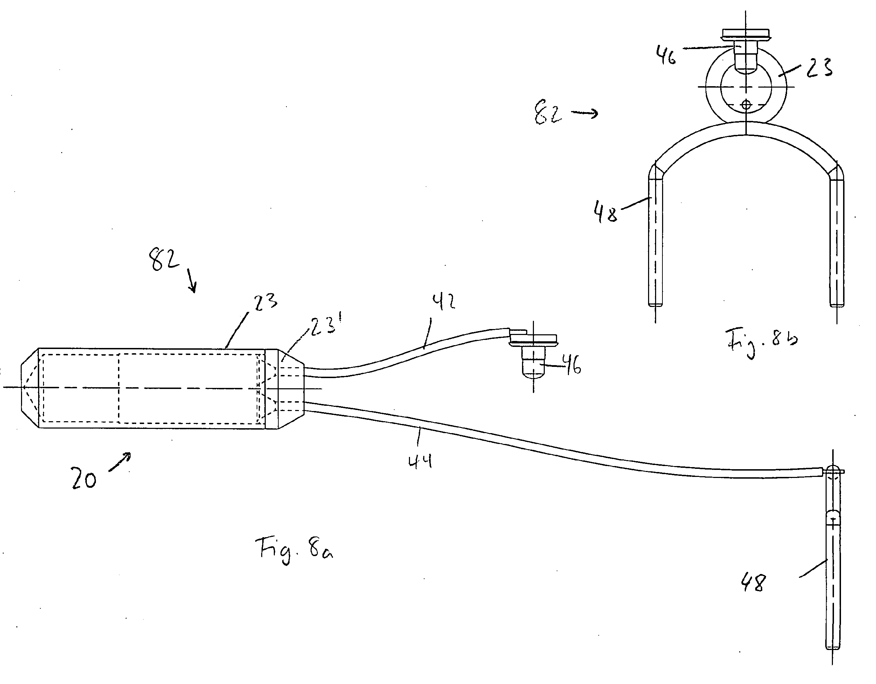

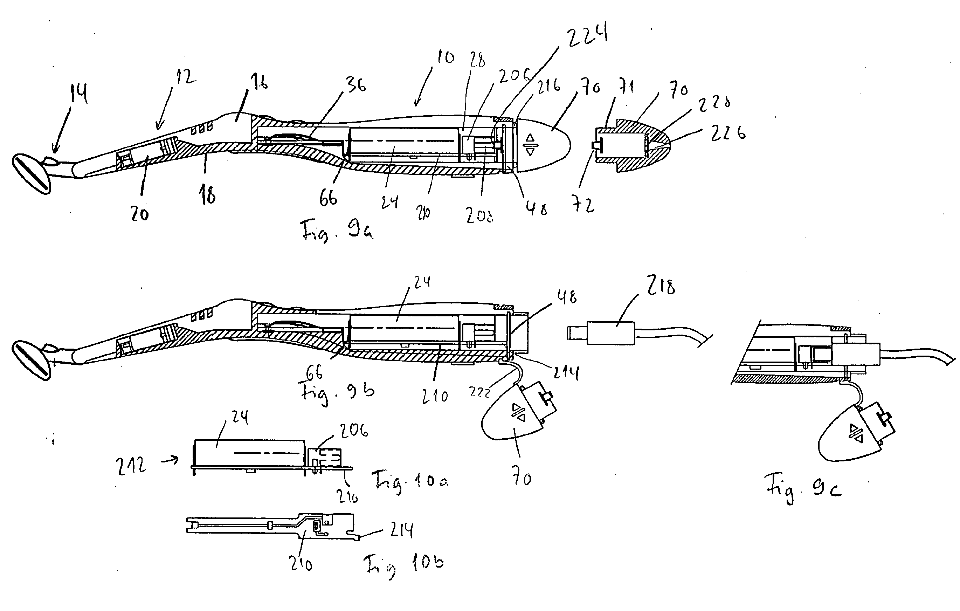

Fig. 9a-c zeigen einen weiteren erfindungsgemässen Rasierer mit einem wiederaufladbaren Energiespeicher 24 (Akkumulator) und einem Kontaktelement 206. Energiespeicher 24 und Kontaktelement 206 sind auf einer Leiterplatte 210 angebracht, die im hinteren Hohlraum 28 des Griffbereichs 10 angeordnet ist. Die Akkumulatorenbaugruppe Die in Fig. 10a, b dargestellte Akkumulatorenbaugruppe 212, bestehend aus Energiespeicher 24, Kontaktelement 206, Widerstand und Leiterplatte 210, ersetzt die oben beschriebene Batterie bei ansonsten unveränderter Konstruktion des Rasierers. Insbesondere sind Gestalt und Herstellung des Körpers mit Hart- und Weichkomponente 16 bzw. 18, Motorenbaugruppe mit Vibrationseinrichtung 20 und Leitungen unverändert.

Die Leiterplatte 210 verfügt über Mittel 214, die eine form- und kraftschlüssige Verbindung mit der Hartkomponente des elektrischen Rasierers erlauben. Vorliegend rasten federnde Schnappnasen 214 (Fig. 10b) hinter dem Kontaktbügel 48 ein. Die Leiterplatte 210 hat eine Dicke von 0.5 - 3 mm vorzugsweise 1 mm. In einer bevorzugten Ausgestaltungsvariante wird die Leiterplatte 210 mit den darauf montierten Bauteilen von hinten in den Innenraum 28 des elektrischen Rasierers eingeführt.

Die Längendifferenz zwischen der konventionellen Batterie und der Akkumulatorenbaugruppe 212 kann durch unterschiedlich lange federnde Verbindungselemente 66 ausgeglichen werden. Damit können in vorteilhafter Weise derselbe Körper, dieselben Herstellungswerkzeuge und weitgehend dieselben Herstellungsschritte eingesetzt werden.

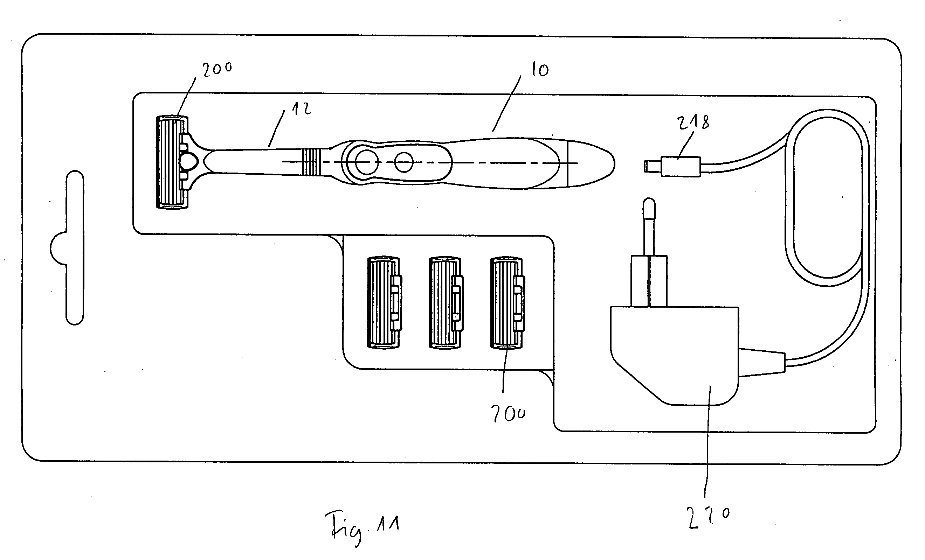

Das Kontaktelement 206 in Form einer Standardbuchse ist mit einem Verankerungselement formschlüssig an der Leiterplatte 210 befestigt. Die Akkumulatorenbaugruppe 212 wird in den Hohlraum 28 im Griffteil 10 eingeschoben. Der Deckel 70 zusammen mit einer Dichtung 216 dient als Dichtelement, mit dem der Hohlraum 28 beim normalen Gebrauch des Rasierers gegen Eindringen von Wasser und anderen Fremdstoffen abgedichtet ist, wie in Fig. 9a dargestellt ist. Fig. 9b zeigt den geöffneten Zustand, bei dem das Kontaktelement 206 für einen Stecker 218 eines Netzteils 220 (Fig. 11) zugänglich ist. Der Deckel 70 wird nach Art eines Bajonett-, Schraub- oder Schnappverschlusses aufgesetzt und ist optional mit einem über den Rasiererkörper gezogenen Befestigungsring über ein Filmscharnier 222 verbunden (Fig. 9b).

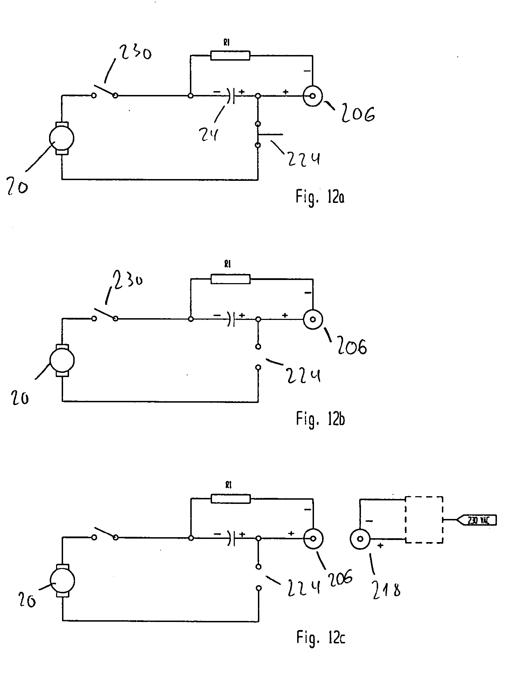

Der Hohlraum 28 kann im geöffneten Zustand nur durch eine Blende (nicht dargestellt) abgedeckt sein, die keine dichtende Funktion hat. Da somit während des Ladens Wasser eindringen könnte, ist durch folgende Massnahmen sichergestellt, dass ein Betrieb der Funktionseinheit 20 unabhängig von der Stellung des Schaltelements 36 nur im geschlossenen, abgedichteten Zustand möglich ist: Wie in der Prinzipschaltskizze in Fig. 12a-c dargestellt, ist in Serie mit dem manuell zu betätigenden Schaltelement 36 ein weiterer Schalter 224 geschaltet, der durch den Kontaktabschnitt 72 im Deckel 70 in Verbindung mit dem Kontaktbügel 48 im Griffbereich 10 gebildet ist. Der Kontaktabschnitt 72 stellt im geschlossenen Zustand eine elektrisch leitfähige Verbindung zwischen dem Pin 208 des Kontaktelements 206 und dem Kontaktbügel 48 her, wodurch die Funktionseinheit 20 im Prinzip betriebsbereit gemacht wird. Wenn das Kontaktelement 218 des Netzteils eingesteckt ist, werden die Kontaktbügel 48 nur von nicht leitfähigen Komponenten des Netzteil-Kontaktelements 218 kontaktiert, so dass der Schalter 224 offen ist.

Im Deckel 70 befindet sich eine Öffnung 226 und eine Membrane 228, durch die beim Betrieb entstehende Gase entweichen können, die jedoch einen ausreichenden Schutz gegen Wasser bildet.

Die Akkumulatorenbaugruppe 212 ist mittels einem Federelement 66 in axialer Richtung flexibel gelagert. In radialer Richtung sind vorzugsweise Dämpfungselemente aus der Weichkomponente an die Hartkomponente angespritzt (nicht dargestellt). Der Kontaktabschnitt 72 und der Pin 208 der Buchse 206 sind so angeordnet, dass der Kontaktabschnitt 72 den Pin 208 beim Drehen des Bajonettverschlusses mit einem Vorspann trifft. Vorzugsweise liegt der Pin 208 der Buchse 206 auf der Drehachse des Deckels 70.

Der Deckel 70 wird aus einer Hart- oder Weichkomponente hergestellt oder aus einer Kombination davon. Der Befestigungsring wird, falls vorhanden, vorzugsweise in einem Arbeitsgang mit dem Deckel hergestellt und besteht vorzugsweise aus demselben Material wie die übrigen weichen Bestandteile. Er ist flexibel und elastisch ausgestaltet um die Drehung zum Verschliessen/Öffnen des Innenraumes unbeschadet aufnehmen zu können. Damit beim Gebrauch keine Druckstellen auf der Handfläche des Benutzers entstehen, ist der Verbindungssteg 222 zwischen Haltering und Deckel 70 vorzugsweise seitlich oder auf der Unterseite des elektrischen Rasierers vorgesehen.

In einer nicht dargestellten Variante der Erfindung nimmt der vergrösserte Deckel 70 einen wesentlichen Anteil des Griffbereichs 10 ein und beherbergt den Energiespeicher 24. Das Kontaktelement 206 ist etwa in der Mitte des Griffbereichs 10 im nun durch den eigentlichen Körper (erster Gehäuseteil) und den Deckel 70 (zweiter Gehäuseteil) gebildeten Hohlraum 28 positioniert. Der erste und zweite Gehäuseteil sind miteinander über ein Gewinde verschraubt. Durch geeignete Mittel ist der Öffnungsweg des Deckels 70 begrenzt. Der Deckel 70 ist damit durch Drehung über einen begrenzten Weg für den Ladevorgang zu öffnen, wobei kein komplettes Entfernen durch den Benutzer vorgesehen ist. Der Weg entspricht wenigstens etwa der Grösse des Kontaktelementes 206. Das Kontaktelement 218 des Netzteils 220 wird an der Vorderseite des Rasierers in das Kontaktelement 206 senkrecht zur Längsachse des Rasierers eingesteckt. Alternativ könnte auch ein Schiebeverschluss, welcher am Griffbereich 10 einschnappt, vorgesehen werden.

Auch bei dieser Variante ist vorzugsweise ein Schalter vorhanden, der beim Verschliessen des Deckels 70 automatisch geschlossen wird. Vorzugsweise ist am Ende der Leiterplatte ein gebogenes Federteil angebracht, welches durch den Deckel gegen einen Akkumulatorpol gedrückt wird und damit als Schalter fungiert. Der Deckel weist dazu an seiner Innenseite einen auf der Längsachse angeordneten Nocken auf, der im geschlossenen Zustand unabhängig von der Drehlage auf das Federteil drückt.

Fig. 11 zeigt ein Verkaufsset, bei dem Rasierer und Netzteil 220 in einer Sichtpackung präsentiert werden.

Fig. 12a-c zeigen eine Prinzipschaltskizze für einen wiederaufladbaren Nassrasierer gemäss Fig. 9a-c. Im Normalbetrieb (Fig. 12a) schliesst der Deckel 70 den Innenraum 29 wasserdicht ab. Ein Schalter 224, welcher durch das Aufbringen/Entfernen des Deckels 70 betätigt wird, ist geschlossen. Der Verbraucher 20 kann durch einen weiteren Schalter 230 durch den Benutzer ein- und ausgeschaltet werden. Wenn der Deckel 70 entfernt ist, schaltet der Schalter 224 die Verbindung zwischen dem Akkumulatoren 24 und dem Verbraucher 20 zwingend aus (Fig. 12b). In geöffnetem, d.h. nicht abgedichtetem Zustand, kann somit der elektrische Rasierer nicht mehr eingeschaltet werden. Bei der Ladung des Akkumulators 24 durch Einstecken des Steckers 218 in die Buchse 206 ist der Innenraum 29 geöffnet. Durch das Anbringen des Schalters 224 kann zusätzlich erreicht werden, dass eine Ladung des Akkumulators 24 in jedem Fall und unabhängig des Zustandes des Schalters 230 nur ohne Last des Verbrauchers 20 geladen werden kann. Wäre der Verbraucher 20 nämlich während der Ladung des Akkumulators 24 in Betrieb (d.h. 230 und 224 geschlossen) und der Akkumulator 24 vollständig entleert, wäre eine Ladung unmöglich.

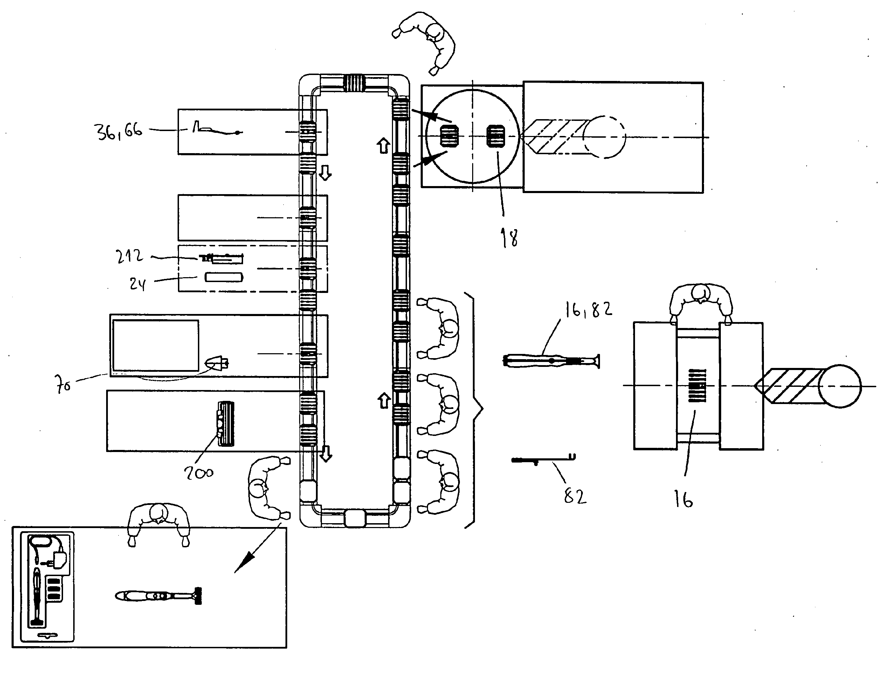

Fig. 13 zeigt lediglich schematisch eine Draufsicht auf eine zur erfindungsgemäßen Herstellung der gemäß der Erfindung ausgebildeten Rasierers dienende Montageanlage, mit der eine weitgehend automatische Handhabung sowie Montage der einzelnen Komponenten und Bauteile erfolgen kann. Dabei kann sowohl eine Rundtisch- als auch eine Transferanlagenanordnung vorgesehen sein. Zum Einsatz kommen zwei oder mehrere Spritzgiessmaschinen, die vorzugsweise zum Spritzen der Hartkomponente und/oder der Weichkomponente des Rasiererkörpers mit Vertikalaggregaten versehen sind. Vorzugsweise wird der Grundkörper bestehend aus der Hartkomponente auf einer separaten Spritzgussmaschine hergestellt und der Montageanlage als Einzelteil beigestellt. Die Spritzgussanlage für das Umspritzen der Funktionsbauteile und der Hartkomponente ist in den Montageablauf integriert. Die Geschwindigkeit und Kavitätenzahl der Umlaufpalette der Monateanlage ist auf die Fachzahl der Umspritzstation abgestimmt (vorzugsweise die gleiche Fachzahl). Die mit der Motorenbaugruppe versehenen Grundkörper werden vorzugsweise automatisch (Handling, Roboter) in die Spritzmaschine eingelegt beziehungsweise. entnommen. Beim Einlegen der Grundkörper wird eine Zentriervorrichtung (extern oder mittels Spritzgusswerkzeug) vorgesehen, um für alle zu umspritzenden Körperkavitäten (z.B. 6-fach) die gleichen Bedingungen zu erhalten.

Die Herstellungsschritte sind (beginnend rechts unten, Umlauf entgegen dem Uhrzeigersinn) die folgenden:
- 1.: Spritzen der Hartkomponente 16
- 2.: Einlegen der vorkonfektionierten Baugruppe 82 in die Hartkomponente 16
- 2.1: Einpressen des Kontaktstiftes 46 und des Kontaktbügels
- 3.: Spritzen der Weichkomponente 18
- 4.: Montage des Schaltelementes (Frosch) 36 (mit Feder 66)
- 4.1: Funktionskontrolle
- 5.: Montage der Batterie 24 oder der Akkumulatorenbaugruppe 212
- 5.1: Vormontage des Verschlussdeckels 70
- 6.: Montage des Verschlussdeckels 70
- 7.: Montage des vorgefertigten Haltevorrichtung und der Wechselklinge 200
- 8.: Verpacken mit oder ohne Netzteil

Abweichend von der beschriebenen Vorgehensweise kann insbesondere in Abhängigkeit von der konkreten Ausgestaltung des Rasierers auch eine andere Reihenfolge der Herstellungsschritte vorgesehen sein.

## Patentansprüche

1. Rasierer, insbesondere zum Nassrasieren, mit einem einen Griffbereich (10), einen Kopfbereich (14) und einen zwischen dem Griffbereich (10) und dem Kopfbereich (14) gelegenen Halsbereich (12) umfassenden Körper und mit zumindest teilweise innerhalb des Körpers angeordneten Funktionsbauteilen, die eine elektrisch betriebene Vibrationseinrichtung (20) zur Erzeugung von Vibrationen im Kopfbereich und eine einen Energiespeicher (24) aufweisende elektrische Versorgungseinrichtung für die Vibrationseinrichtung (20) umfassen, **dadurch gekennzeichnet, dass** der Körper aus zumindest einer als Festigkeitsträger dienenden Hartkomponente (16) sowie wenigstens einer im Spritzgiessverfahren hergestellten weiteren Kunststoffkomponente (18) besteht, wobei wenigstens einige der Funktionsbauteile zumindest teilweise direkt mit der weiteren Kunststoffkomponente (18) umspritzt sind.

2. Rasierer nach Anspruch 1, **dadurch gekennzeichnet, dass** die weitere Kunststoffkomponente (18) eine Weichkomponente ist.

3. Rasierer nach Anspruch 1 oder 2, **dadurch gekennzeichnet, dass** die Hartkomponente (16) aus einem insbesondere im Spritzgussverfahren hergestellten Kunststoff oder einem metallischen Werkstoff besteht, der vorzugsweise an einem elektrischen Kreislauf der Versorgungseinrichtung beteiligt ist.

4. Rasierer nach einem der vorangegangenen Ansprüche, **dadurch gekennzeichnet, dass** die Funktionsbauteile im Bereich der Grenzzone zwischen der Hartkomponente (16) und der weiteren Kunststoffkomponente (18) angeordnet sind.

5. Rasierer nach einem der vorangegangenen Ansprüche, **gekennzeichnet durch** einen in der Hartkomponente (16) im Griffbereich (10) gebildeten Hohlraum (28), dessen Abmessungen an die Abmessungen des Energiespeichers (24), insbesondere einer Batterie oder einer Akkumulatorenbaugruppe (82), angepasst sind.

6. Rasierer nach Anspruch 5, **dadurch gekennzeichnet, dass** die Funktionsbauteile den Hohlraum (28) gegenüber der weiteren Kunststoffkomponente (18) abdichten.

7. Rasierer nach Anspruch 5 oder 6, **dadurch gekennzeichnet, dass** der Hohlraum (28) am dem Kopfbereich abgewandten Ende des Körpers eine Öffnung aufweist, die durch ein Deckelelement (70) verschliessbar ist.

8. Rasierer nach Anspruch 7, **dadurch gekennzeichnet, dass** das Deckelelement (70) ganz oder teilweise entfernt werden kann, insbesondere um den Energiespeicher (24) auszutauschen oder auf den Energiespeicher (24) zum Zweck des Wiederaufladens zuzugreifen.

9. Rasierer nach einem der vorangegangenen Ansprüche, **dadurch gekennzeichnet, dass** Funktionsbauteile mittels einer flexiblen elektrischen Leitung (42, 44), vorzugsweise eines metallischen Drahtes, miteinander verbunden sind.

10. Rasierer nach einem der vorangegangenen Ansprüche, **dadurch gekennzeichnet, dass** die Vibrationseinrichtung (20) im Halsbereich (12) angeordnet und wenigstens teilweise mit der Weichkomponente umspritzt ist.

11. Rasierer nach einem der vorangegangenen Ansprüche, **dadurch gekennzeichnet, dass** zwischen der Vibrationseinrichtung (20) und dem Griffbereich (10) ein Vibrationsdämpfungsbereich (32) angeordnet ist.

12. Rasierer nach einem der vorangegangenen Ansprüche, **dadurch gekennzeichnet, dass** die Versorgungseinrichtung einen wiederaufladbaren Energiespeicher (24) und wenigstens ein Kontaktelement (206) umfasst.

13. Rasierer nach Anspruch 12, **dadurch gekennzeichnet, dass** der Energiespeicher (24) innerhalb eines Hohlraums (28) im Griffbereich (10) angeordnet ist, wobei der Hohlraum (28) durch ein Dichtelement abgedichtet ist, um den Kontakt des Energiespeichers mit Spritzwasser und anderen Fremdstoffen zu verhindern.

14. Rasierer nach Anspruch 13, **dadurch gekennzeichnet, dass** der Energiespeicher (24) und das wenigstens eine Kontaktelement (206) innerhalb des Hohlraums (28) angeordnet sind, wobei der Hohlraum (206) verschliessbar und zumindest so weit zu öffnen ist, dass das wenigstens eine Kontaktelement (206) zumindest für den Ladevorgang von aussen zugänglich ist.

15. Rasierer nach Anspruch 13 oder 14, **dadurch gekennzeichnet, dass** der Hohlraum (28) in einem ersten Gehäuseteil gebildet ist und durch einen insbesondere als Deckel (70) ausgebildeten zweiten Gehäuseteil verschlossen werden kann, wobei der erste und der zweite Gehäuseteil vorzugsweise miteinander verschraubt sind, insbesondere durch ein Gewinde mit einer Wegbegrenzung.

16. Rasierer nach Anspruch 15, **dadurch gekennzeichnet, dass** ein Schalter (224) mit dem zweiten Gehäuseteil zusammenwirkt, durch den die Vibrationseinrichtung (20) in der offenen Stellung der Gehäuseteile deaktiviert ist.

17. Rasierer nach Anspruch 16, **dadurch gekennzeichnet, dass** der Schalter (224) das Kontaktelement (206) sowie ein relativ dazu bewegbares Teil (72) umfasst, wobei das bewegbare Teil (72) in der geschlossenen Stellung mit dem Kontaktelement (206) eine elektrisch leitfähige Verbindung eingeht.

18. Rasierer nach einem der Ansprüche 12-17, **dadurch gekennzeichnet, dass** das Kontaktelement (206) einen Pin (208) aufweist, der mit einem Pol des Energiespeichers (24) vorzugsweise unmittelbar elektrisch leitfähig verbunden ist.

19. Rasierer nach Anspruch 12, **dadurch gekennzeichnet, dass** das wenigstens eine Kontaktelement (206) innerhalb einer Aussparung im Bürstenkörper angeordnet ist, so dass es relativ zur Aussenfläche des Bürstenkörpers nach innen versetzt ist, wobei die Aussparung vorzugsweise vom Kopfbereich abgewandt orientiert ist.

20. Rasierer nach Anspruch 19, **dadurch gekennzeichnet, dass**, die Form der Aussparung an die Form eines weiteren Kontaktelements eines Netzteils für den Energiespeicher angepasst ist.

21. Verfahren zur Herstellung eines Rasierers, insbesondere eines Nassrasierers, nach einem der vorangegangenen Ansprüche, bei dem
- der Körper aus zumindest einer als Festigkeitsträger dienenden Hartkomponente (16) sowie wenigstens einer im Spritzgiessverfahren angespritzten weiteren Kunststoffkomponente (18) hergestellt wird,
- und wenigstens einige der Funktionsbauteile während der Herstellung des Körpers zumindest teilweise direkt mit der weiteren Kunststoffkomponente (18) umspritzt werden.

22. Verfahren nach Anspruch 21, **dadurch gekennzeichnet**, das als weitere Kunststoffkomponente (18) eine Weichkomponente verwendet wird.

23. Verfahren Anspruch 21 oder 22, **dadurch gekennzeichnet, dass** zunächst eine erste Komponente (16) ohne Funktionsbauteile hergestellt wird und daraufhin zumindest einige Funktionsbauteile an der ersten Komponente (16) positioniert und fixiert werden, wobei anschließend die Einheit aus erster Komponente und Funktionsbauteilen mit zumindest einer weiteren Kunststoffkomponente (18) zumindest teilweise umspritzt wird.

24. Verfahren Anspruch 23, **dadurch gekennzeichnet, dass** die mit der weiteren Kunststoffkomponente (18) wenigstens teilweise umspritzten Funktionsbauteile die Vibrationseinrichtung (20), elektrische Leitungen (42, 44), vorzugsweise auch wenigstens einen Kontaktstift (46) zur Herstellung einer elektrisch leitfähigen Verbindung mit dem Energiespeicher, umfassen.

25. Verfahren nach einem der Ansprüche 21-24, **dadurch gekennzeichnet, dass** zumindest einige Funktionsbauteile derart an der bereits hergestellten Hartkomponente (16) angeordnet werden, dass sich die Funktionsbauteile bezogen auf die Strömungsrichtung der noch zu spritzenden weiteren Kunststoffkomponente (18) zumindest bereichsweise im Schatten wenigstens eines schützenden Abschnitts der Hartkomponente (16) befinden.

26. Verfahren nach einem der Ansprüche 21-25, **dadurch gekennzeichnet, dass** ein Funktionsbauteil oder eine Baugruppe von Funktionsbauteilen umspritzt wird, das bzw. die sich über einen wesentlichen Teil der Länge des Körpers erstreckt.

27. Verfahren nach einem der Ansprüche 21-26, **dadurch gekennzeichnet, dass** zumindest die Hartkomponente (16) mit einem vorzugsweise in Längsrichtung verlaufenden, vorzugsweise nach Art einer Nut ausgebildeten Halte- oder Fixierbereich für eine oder mehrere elektrische Leitungen (42, 44) versehen wird.

28. Verfahren nach einem der Ansprüche 21-27, **dadurch gekennzeichnet, dass** ein erster Gehäuseteil mit wenigstens einem für ein oder mehrere später einzusetzende Funktionsbauteile, insbesondere den Energiespeicher, vorgesehenen Hohlraum (28) hergestellt wird, der eine vorzugsweise am dem Kopfbereich abgewandten Ende des Körpers eine Öffnung zum Einsetzen der entsprechenden Funktionsbauteile aufweist.

29. Verfahren nach Anspruch 28, **dadurch gekennzeichnet, dass** ein zweiter Gehäuseteil (70) zur Abdichtung des Hohlraums hergestellt und nach dem Einsetzen von Funktionsbauteilen in den Hohlraum (28) auf dessen Öffnung vorzugsweise dichtend aufgesetzt wird.

30. Verfahren nach einem der Ansprüche 21-29, **dadurch gekennzeichnet, dass** durch Spritzen der weiteren Kunststoffkomponente (18), vorzugsweise der Weichkomponente, ein zum Betätigen wenigstens eines elektrischen Funktionsbauteils eindrückbarer Betätigungsbereich ausgebildet wird, insbesondere ein Schaltbereich (30) zum Beaufschlagen eines Schaltelementes (36) zum Ein- und Ausschalten des Rasierers.

31. Verfahren nach einem der Ansprüche 21-30, **dadurch gekennzeichnet, dass** ein insbesondere im Halsbereich (12) oder im Bereich des Übergangs zwischen Halsbereich (12) und Griffbereich (10) gelegener Vibrationsdämpfungsbereich des Körpers aus wenigstens zwei unterschiedlichen Materialkomponenten (16, 18) gebildet wird.

32. Verfahren nach Anspruch 31, **dadurch gekennzeichnet, dass** die Hartkomponente (16) zur Bildung des Vibrationsdämpfungsbereiches (32) mit einem Muster von Ausnehmungen (34) hergestellt wird und dass die Ausnehmungen (34) anschließend beim Spritzen der

33. Verfahren nach einem der Ansprüche 21-32, **dadurch gekennzeichnet, dass** als weitere Kunststoffkomponente (18) eine Weichkomponente an einem einzigen Einspritzpunkt eingespritzt wird.
